(19) Europäisches Patentamt / European Patent Office / Office européen des brevets

(11) **EP 4 007 155 A1**

(12) **EUROPÄISCHE PATENTANMELDUNG**

(43) Veröffentlichungstag:
**01.06.2022   Patentblatt 2022/22**

(21) Anmeldenummer: **21211070.4**

(22) Anmeldetag: **29.11.2021**

(51) Internationale Patentklassifikation (IPC):
*H02P 3/14* (2006.01)          *H02J 7/34* (2006.01)
*H02M 3/155* (2006.01)

(52) Gemeinsame Patentklassifikation (CPC):
**H02J 7/345; H02M 3/155; H02P 3/14**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **27.11.2020   DE 102020131537**

(71) Anmelder: **ACD Antriebstechnik GmbH**
**88480 Achstetten (DE)**

(72) Erfinder:
• **Fesseler, Aaron**
**88480 Achstetten (DE)**
• **Fesseler, Einar**
**88480 Achstetten (DE)**

(74) Vertreter: **Schmidt, Alexander**
**Sonnenberg Harrison Partnerschaft mbB**
**Herzogspitalstraße 10a**
**80331 München (DE)**

(54) **ENERGIESPEICHERUNG MIT STROMQUELLENSCHALTUNG**

(57) Schaltungsvorrichtung zur Speicherung von Rückspeiseenergie einer Anlage, umfassend einen Eingang verbunden mit einem dreiphasigem Versorgungsnetz über Phasen, einen mit dem Eingang verbundenen Zwischenkreis umfassend einen Zwischenkreisspeicher und einen mit dem Zwischenkreis verbunden Ausgang, wobei die Schaltungsvorrichtung weiter einen in Serie zum Zwischenkreisspeicher geschalteten zusätzlichen Energiespeicher, in dem die Rückspeiseenergie von der Anlage gespeichert wird, eine Stromquellenschaltung und eine Steuerung, verbunden mit dem Zwischenkreis und der Stromquellenschaltung, umfasst

Fig. 3

EP 4 007 155 A1

**Beschreibung**

Diese Anmeldung beansprucht die Priorität der deutschen Patentanmeldung mit der Nummer DE 10 2020 131 537.6, eingereicht am 27. November 2020. Die gesamte Offenbarung der deutschen Patentanmeldung DE 10 2020 131 537.6 ist hierin durch Bezugnahme enthalten.

Die vorliegende Erfindung betrifft eine Schaltungsvorrichtung mit Energiespeicherung in einem zusätzlichen Energiespeicher einer Anlage, die elektrische Energie in mechanische Energie umwandelt.

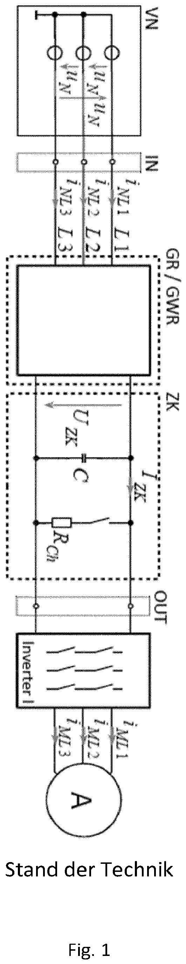

Eine aus dem Stand der Technik bekannte Schaltungsvorrichtung ist in Fig. 1 dargestellt und umfasst üblicherweise einen Eingang IN, verbunden mit einem Versorgungsnetz VN und über Phasen L1, L2, L3 weiter verbunden mit einem Gleichrichter GR bzw. einem Gleich-Wechselrichter GWR. Zwischen dem Gleichrichter GR bzw. dem Gleich-Wechselrichter GWR und einem Ausgang OUT ist ein Zwischenkreis ZK angeordnet. Ein Inverter I verbindet den Ausgang OUT mit einer Anlage A, die eine Last L antreibt oder abbremst.

Der Zwischenkreis ZK umfasst einen Zwischenkreisspeicher C, welcher in dieser Fig. 1 als Standard-Kondensator ausgebildet ist. Ferner umfasst der Zwischenkreis ZK einen Chopper-Widerstand bzw. Heizwiderstand $R_{Ch}$.

Beim Betrieb einer ausgangseitig an dem Inverter I angeschlossenen Anlage A, fließt ein Strom aus dem Versorgungsnetz VN über den Gleichrichter GR bzw. den Gleich-Wechselrichter GWR, den Zwischenkreis ZK und den Inverter I zur Anlage A. Wird die Anlage A abgebremst, wird Rückspeiseenergie aus der Anlage A in den Zwischenkreis ZK rückgespeist. Die Rückspeiseenergie wird bis zu einer gewissen Menge in dem Zwischenkreisspeicher C gespeichert und bei Überschreiten dieser Menge wird die Energie in dem Chopper-Widerstand $R_{Ch}$ in Wärme umgewandelt oder mit einem aktiven Gleich-Wechselrichter GWR ins Versorgungsnetz VN zurückgespeist.

Der Gleichrichter GR in Fig. 1 kann beispielsweise als Dreiphasen-Gleichrichter eingerichtet sein. Der Gleichrichter GR ist dabei mindestens einer von einem konventionellen Dioden-Gleichrichter und einem geschalteten Gleichrichter (Transistoren) und kann als aktive Einspeisung mit Rückspeisefähigkeit realisiert werden, woraus sich dann je nach Hoch- oder Tiefsetzung bei der aktiven Gleichrichtung variabel wählbare Zwischenkreisspannungen $U_{ZK}$ ergeben.

Eine Möglichkeit Energie im Zwischenkreis ZK zu speichern, besteht darin, den Zwischenkreisspeicher C, ausgebildet als Kondensator wesentlich größer zu dimensionieren. So kann zurückfließende Energie in diesem ganz einfach gespeichert werden. Nachteilig ist jedoch, dass dadurch ein größerer Bauraum nötig ist und sich dies direkt auf die Kosten auswirkt.

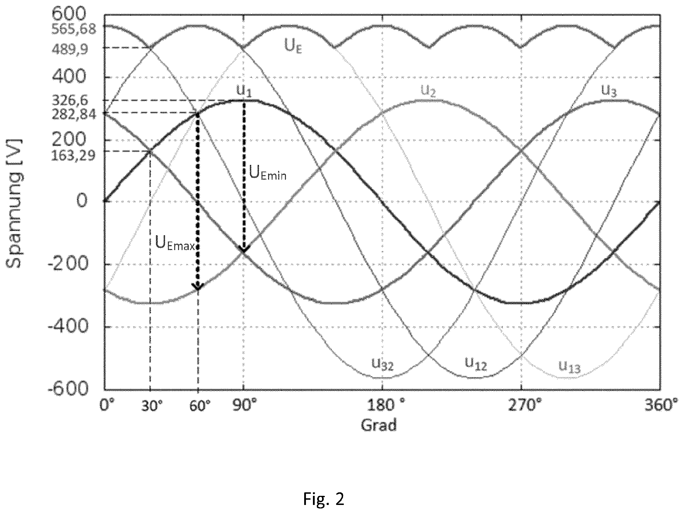

Fig. 2 stellt Spannungen in dem Dreiphasen-Versorgungsnetz VN dar. Aus dieser Figur 2 wird ersichtlich, dass nach dem Dreiphasen-Gleichrichter GR ohne Kondensator C eine wellende Spannung $U_E$ vorhanden wäre. Mit Hilfe des Kondensators C ergibt sich (ohne Last) eine Spitzenwert-Gleichrichtung mit einer Eingangszwischenkreis-Spitzen-Spannung $U_{ZKEs}$:

$$U_{ZKEs} = U_N \cdot \sqrt{2}.$$

Beim europäischen Versorgungsnetz mit einer verketteten Spannung von $U_N = U_{12} = U_{23} = U_{31} = 400$ V (nominal) entspricht daher die Eingangszwischenkreis-Spitzen-Spannung $U_{ZKEs} = 565{,}68$ V.

Für eine speicherbare Energie Ec in einem Kondensator gilt allgemein:

$$E_C = \frac{1}{2} c \cdot U_c{}^2$$

Dabei ist die speicherbare Energie $E_C$ in einem Kondensator abhängig von einer Kondensatorspannung $U_c$ und einem Kapazitätswert c. Bei der vorliegenden Anwendung gilt jedoch speziell:

$$E_C = \frac{1}{2} c \cdot \Delta U^2 = \frac{1}{2} c \cdot (U_{ZKmax} - U_{ZKEs})^2$$

Die speicherbare Energie EC in einem Kondensator C ergibt sich aus der Differenz zwischen maximal zulässiger Zwischenkreisspannung $U_{ZKmax}$ bei der Rückspeisung und der vom Versorgungsnetz VN herrührenden Eingangszwischenkreis-Spitzen-Spannung $U_{ZKEs}$. Das heißt, dass die Zwischenkreisspannung $U_{ZK}$ im Fall der Rückspeisung weit höher als die Eingangszwischenkreis-Spitzen-Spannung $U_{ZKEs}$ sein muss, um eine größere Menge Energie speichern zu können.

Eine Zwischenkreisspannung $U_{ZK}$ in der Höhe von 800 V bis 900 V ist üblich, wobei sich die Höhe aus der tatsächlich zurückspeisenden Energie ergibt, aber eine maximale Zwischenkreisspannung $U_{ZKmax}$ bauteilbedingt nicht überschritten werden darf. Bei der Energieabgabe des Kondensators C an die Anlage A wird die Zwischenkreisspannung $U_{ZK}$ wieder auf die vom Versorgungsnetz VN herrührende Eingangszwischenkreis-Spitzen-Spannung $U_{ZKEs}$ abgesenkt. Je nach Lastbedingungen und Größe des Kondensators C nimmt die Eingangszwischenkreis-Spitzen-Spannung $U_{ZKEs}$ eine nicht wellende bis wellende Form an (vgl. $U_E$ in Fig. 2). Dies führt jedoch dazu, dass jene Menge der im Kondensator C sowieso gespeicherten Energie, aufgrund vom Versorgungsnetz VN herrührender Eingangszwischenkreis-Spitzen-Spannung $U_{ZKEs}$, nicht nutzbar ist.

Mit anderen Worten, um eine größere Menge an Energie zu speichern, wird ein Kondensor C mit großem Kapazitätswert c benötigt. Die Energie

$$E = \frac{1}{2} c \cdot U_{ZKEs}^{2}$$

kann nicht genutzt werden, weil systembedingt eine Mindestspannung am Kondensator C nicht unterschritten werden kann. Somit ist immer eine nicht nutzbare Mindestenergie vorhanden. Daher ist es sinnvoll die Kapazität C nur so groß zu wählen, wie es systembedingt nötig ist, um den Anteil nicht nutzbarer Energie ("tote Energie") so niedrig als möglich zu halten.

Die Aufgabe der nachstehenden Lehre besteht darin, eine Schaltungsvorrichtung bereitzustellen, welche Rückspeiseenergie einer Anlage in einem Zwischenkreis der Schaltungsvorrichtung speichern kann und gleichzeitig die oben genannten Nachteile löst.

Kurzbeschreibung der Erfindung

Diese Aufgabe wird durch eine Schaltungsvorrichtung zur Speicherung von Rückspeiseenergie einer Anlage gelöst, umfassend einen Eingang verbunden mit einem dreiphasigem Versorgungsnetz über Phasen, einen mit dem Eingang verbundenen Zwischenkreis umfassend einen Zwischenkreisspeicher und einen mit dem Zwischenkreis verbunden Ausgang, wobei die Schaltungsvorrichtung weiter einen in Serie zum Zwischenkreisspeicher geschalteten zusätzlichen Energiespeicher, in dem die Rückspeiseenergie von der Anlage gespeichert wird, eine Stromquellenschaltung und eine Steuerung, verbunden mit dem Zwischenkreis und der Stromquellenschaltung, umfasst.

Nach einem weiteren Aspekt ist die Steuerung mit einer Sollspannung und einer Eingangszwischenkreisspannung verbunden. Dadurch kann die Steuerung einen Abgleich zwischen der Sollspannung und der Eingangszwischenkreisspannung durchführen.

Nach einem weiteren Aspekt ist die Steuerung derart eingerichtet, dass die Steuerung gemäß einem Abgleich zwischen der Sollspannung und der Eingangszwischenkreisspannung einen zusätzlichen Stromanteil aus dem zusätzlichen Energiespeicher einstellt. Dadurch kann der Energiefluss für den Energiespeicher geregelt werden.

Nach einem weiteren Aspekt umfasst die Schaltungsvorrichtung ferner einen Gleichrichter, angeordnet zwischen Eingang und Zwischenkreis der Schaltungsstruktur.

Nach einem weiteren Aspekt ist der Gleichrichter mindestens eines aus einem Dioden-Gleichrichter oder geschalteten Gleichrichter ist.

Nach einem weiteren Aspekt umfasst die Schaltungsvorrichtung einen Wechsel-Gleichrichter, angeordnet zwischen Eingang und Zwischenkreis. Durch den Wechselgleichrichter kann die Rückspeiseenergie auch in das Versorgungsnetz zurückgespeist werden.

Nach einem weiteren Aspekt umfasst der zusätzliche Energiespeicher mindestens ein von einem DLC (Double Layer Capacitor), Goldcaps, Supercaps oder Standard-Kondensator umfassendes Array.

Nach einem weiteren Aspekt umfasst die Schaltungsvorrichtung ferner mehrere zusätzliche Energiespeicher und mehrere Stromquellenschaltungen. Dadurch kann die Anordnung des Arrays an die Anforderungen der Energiespeicherung das Antriebssystem angepasst werden.

Die oben genannte Aufgabe wird des Weiteren durch ein Verfahren zur Versorgung einer Anlage mit Energie, unter Verwendung von Rückspeiseenergie der Anlage, gelöst. Beim Verfahren wird eine Anlage abgebremst und dabei Rückspeiseenergie erzeugt. Dir Rückspeiseenergie der Anlage wird in einen Zwischenkreisspeicher und einen zusätzlichen Energiespeicher geleitet. Eine Eingangszwischenkreisspannung wird erfasst. Die Eingangszwischenkreisspannung wird mit einer Sollspannung abgeglichen. Der Zwischenkreisspeicher wird gemäß des Abgleichergebnisses gesperrt. Die Rückspeiseenergie wird im Wesentlichen in den zusätzlichen Energiespeicher und nicht im Zwischenkreisspeicher gespeichert. Die Anlage wird mit Energie aus dem Zwischenkreisspeicher und dem zusätzlichen Energiespeicher versorgt.

Nach einem Aspekt erfolgt das Leiten der Rückspeiseenergie von der Anlage in den zusätzlichen Energiespeicher selbsttätig ohne Eingriff der Steuerung durch Sperren einer Zwischenkreisdiode.

Nach einem weiteren Aspekt erfolgt das Speichern der Rückspeiseenergie durch einen Stromquellenstrom aus einer Stromquellenschaltung im Wesentlichen in den zusätzlichen Energiespeicher und nicht im Zwischenkreisspeicher.

Kurzbeschreibung der Zeichnungen

Die hier offenbarte Lehre wird nun anhand von Zeichnungen näher erläutert. Es zeigen:

Fig. 1 stellt eine Schaltungsvorrichtung nach dem Stand der Technik dar.
Fig. 2 stellt ein Diagramm mit Spannungen im Dreiphasen-System dar.
Fig. 3 stellt eine Schaltungsvorrichtung gemäß einem ersten Aspekt dar.
Fig. 4 stellt ein erstes Beispiel für ein Array eines zusätzlichen Energiespeichers dar.
Fig. 5 stellt ein zweites Beispiel für ein Array des zusätzlichen Energiespeichers dar.
Fig. 6 stellt eine Schaltungsvorrichtung gemäß einem zweiten Aspekt (mit unidirektionaler Funktion der Stromquellenschaltung) dar.
Fig. 7 stellt eine Schaltungsvorrichtung gemäß einem dritten Aspekt (mit bidirektionaler Funktion der Stromquellenschaltung) dar.
Fig. 8A bis Fig. 8D stellen erste Kennlinien beim Anlauf und Betrieb einer Anlage bei entladenem zusätzlichen Energiespeicher dar.

Fig. 9A bis 9F stellen zweite Kennlinien beim Anlauf und Betrieb der Anlage bei entladenem zusätzlichen Energiespeicher dar.

Fig. 10A bis Fig. 10D stellen dritte Kennlinien beim Anlauf und Betrieb der Anlage bei entladenem zusätzlichen Energiespeicher dar.

Fig. 11A bis Fig. 11D stellen erste Kennlinien beim Abbremsen der Anlage und Laden des zusätzlichen Energiespeichers dar.

Fig. 12A bis Fig. 12F stellen zweite Kennlinien beim Abbremsen der Anlage und Laden des zusätzlichen Energiespeichers dar.

Fig. 13A bis Fig. 13D stellen dritte Kennlinien beim Abbremsen der Anlage und Laden des zusätzlichen Energiespeichers dar.

Fig. 14 bis Fig. 14D stellen erste Kennlinien beim Anlauf und Betrieb der Anlage mit Entladung des zusätzlichen Energiespeichers bei unidirektionaler Stromquellenschaltung dar.

Fig. 15A bis Fig. 15F stellen zweite Kennlinien beim Anlauf und Betrieb der Anlage mit Entladung des zusätzlichen Energiespeichers unidirektionaler Stromquellenschaltung dar.

Fig. 16A bis Fig. 16D stellen dritte Kennlinien beim Anlauf und Betrieb der Anlage mit Entladung des zusätzlichen Energiespeichers unidirektionaler Stromquellenschaltung dar.

Fig. 17A bis Fig. 17D stellen erste Kennlinien beim Anlauf und Betrieb der Anlage mit Entladung des zusätzlichen Energiespeichers bei bidirektionaler Stromquellenschaltung dar.

Fig. 18A bis Fig. 18F stellen zweite Kennlinien beim Anlauf und Betrieb der Anlage mit Entladung des zusätzlichen Energiespeichers bei bidirektionaler Stromquellenschaltung dar.

Fig. 19A bis Fig. 19D stellen dritte Kennlinien beim Anlauf und Betrieb der Anlage mit Entladung des zusätzlichen Energiespeichers bei bidirektionaler Stromquellenschaltung dar.

Detaillierte Beschreibung der Erfindung

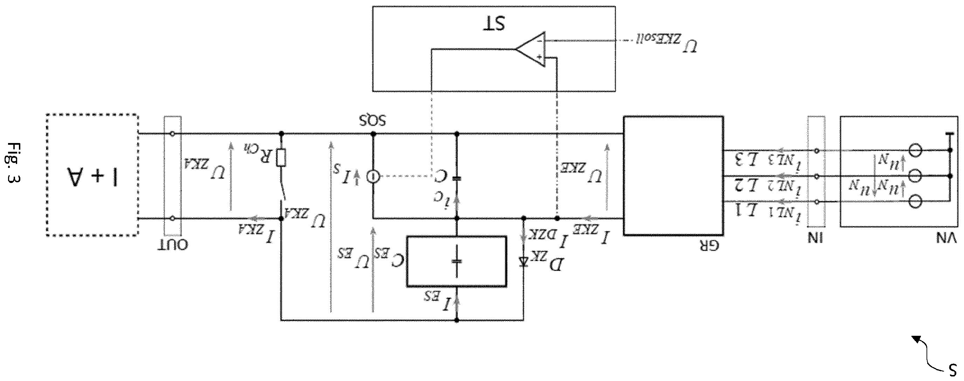

Fig. 3 stellt eine Schaltungsvorrichtung S nach einem ersten Aspekt dar. Diese Schaltungsvorrichtung S baut auf die Schaltungsvorrichtung nach dem Stand der Technik (vgl. Fig. 1) auf, daher werden die in Bezug auf Fig. 1 genannten Komponenten nicht näher beschrieben.

Die Schaltungsvorrichtung S umfasst einen zusätzlichen Energiespeicher $C_{ES}$, eine Stromquellenschaltung SQS und eine Steuerung ST. Um die Rückspeiseenergie in dem zusätzlichen Energiespeicher $C_{ES}$ zu speichern, ist/wird der zusätzliche Energiespeicher $C_{ES}$ in Serie zum Zwischenkreisspeicher C geschaltet. Der zusätzliche Energiespeicher $C_{ES}$ umfasst zum Beispiel mindestens einen von einem DLC (Double Layer Capacitor), Goldcaps, Supercaps und Sandard-Kondensator, oder einer anderen Technologie. Die Kondensatoren können in einem Array zusammen verbaut werden, um die benötigte Gesamtkapazität und Spannungsfestigkeit zu erreichen.

Der zusätzliche Energiespeicher $C_{ES}$ kann entweder an einem positiven Zweig, an einem negativen Zweig oder am positiven und negativen Zweig angeordnet sein/werden. Technologisch ist die Wirkung die gleiche, weshalb hier eine Anordnung des zusätzlichen Energiespeichers $C_{ES}$ am positiven Zweig, wie in Fig. 3 dargestellt, beschrieben wird.

Der Wert einer, aus dem Gleichrichter GR stammenden, Eingangszwischenkreisspannung $U_{ZKE}$, liegt über dem Zwischenkreisspeichers C an, nicht aber über dem zusätzlichen Energiespeicher $C_{ES}$. Über den zusätzlichen Energiespeicher $C_{ES}$ wird individuell ein gewünschter Wert einer Speicherspannung $U_{ES}$ gewählt, der von minimal 0 V bis auf einen definiert zulässigen Spannungswert größer 0 V ansteigen kann. Im Unterschied zur einfachsten Möglichkeit, die aus dem Stand der Technik bekannten Gleichrichtung mit vergrößertem Kondensator C (s. oben), kann mit der in Fig. 3 dargestellten Schaltung der Spannungshub am zusätzlichen Energiespeicher $C_{ES}$ weitestgehend in vollem Umfang genutzt werden. Es ergibt sich:

$$E_{ES} = \frac{1}{2} c_{ES} \cdot U_{ES}{}^2$$

Eine speicherbare Energie $E_{ES}$ in dem zusätzlichen Energiespeicher $C_{ES}$ ergibt sich aus der gewünschten Speicherspannung $U_{ES}$ und einem Kapazitätswert $c_{ES}$ des zusätzlichen Energiespeicher $C_{ES}$.

Die Steuerung ST ist mit einer Eingangszwischenkreis-Soll-Spannung $U_{ZKEsoll}$ und der Eingangszwischenkreisspannung $U_{ZKE}$ verbunden und ist derart eingerichtet, dass die Steuerung ST gemäß einem Abgleich zwischen der Eingangszwischenkreis-Soll-Spannung $U_{ZKEsoll}$ und der Eingangszwischenkreisspannung $U_{ZKE}$ einen zusätzlichen Stromanteil $I_S$ aus dem zusätzlichen Energiespeicher $C_{ES}$ einstellt.

Sobald aufgrund der von der Anlage A herrührenden Energierückspeisung ein Speicherstrom $I_{ES}$ fließt, steigen die Eingangszwischenkreisspannung $U_{ZKE}$ und die gewünschte Speicherspannung $U_{ES}$ entsprechend eines Kapazitätswerts c des Zwischenkreisspeichers C und des Kapazitätswerts $c_{ES}$ des zusätzlichen Energiespeichers $C_{ES}$ an. Sobald die Eingangszwischenkreisspannung $U_{ZKE}$ um einen gewissen Differenzwert $\Delta U$ angestiegen ist, verhindert die Stromquellenschaltung SQS ein weiteres Ansteigen der Eingangszwischenkreisspannung $U_{ZKE}$, indem die Steuerung ST, gemäß des Abgleichs zwischen der Eingangszwischenkreis-Soll-Spannung $U_{ZKEsoll}$ und der Eingangszwischenkreisspannung $U_{ZKE}$, einen Stromanteil Is einstellt und einen Kondensatorstrom ic zu Null werden lässt. Die Stromquellenschaltung SQS wird je nach Funktion unidirektional, bei welchem der Stromanteil $I_S$ gleich positiv oder negativer Strom ist, oder bidirektional, bei welchem der Stromanteil Is gleich positiver und negativer Strom ist, ausgelegt, wie weiter unten näher erklärt wird. In einem nicht limitierenden Aspekt wird der Kapazitätswert $c_{ES}$ des zusätzlichen Energiespeichers $C_{ES}$ um einen beliebigen, von der gewünschten zu speichernden maximalen Rückspeiseenergie abhängigen Faktor größer oder kleiner als der Kapazitätswert $c$ des Zwischenkreisspeichers $C$ gewählt. Dabei wird der Kapazitätswert $c$ des Zwischenkreisspeichers $C$ unter Berücksichtigung der Stromquellenschaltung SQS gewählt.

Die Stromquellenschaltung SQS kann auf verschiedene Weisen realisiert werden. Es können beispielsweise Wandlerschaltungen für Hoch- oder Tiefsetzung eingesetzt werden, welche Hochsetzsteller, Tiefsetzsteller, Sperr- oder Durchflusswandler als auch resonant schaltende Wandlersysteme umfassen.

Um die Schaltungsvorrichtung S möglichst kompakt zu realisieren, sind beliebige Taktfrequenzen für Wandlersysteme bzw. Stromquellenschaltungen SQS möglich. Hier gilt, dass hohe Taktfrequenzen Kosten und Bauraum begünstigen.

Eine Ausgangszwischenkreisspannung $U_{ZKA}$ ergibt sich aus der von der Gleichrichtung herrührenden Eingangszwischenkreisspannung $U_{ZKE}$ und der am zusätzlichen Energiespeicher $C_{ES}$ anliegenden Speicherspannung $U_{ES}$. Es gilt:

$$U_{ZKA} = U_{ZKE} + U_{ES}$$

Die Ausgangszwischenkreisspannung $U_{ZKA}$ wird wie bisher die Zwischenkreisspannung $U_{ZK}$ auch, bei Antrieben (vgl. Fig. 1), standardmäßig gewählt. Der Wert der tatsächlich verwendeten Speicherspannung $U_{ES}$ ist abhängig von den verwendeten Energiespeichern $C$, $C_{ES}$ und der gesamten Anordnung.

Die Zwischenkreisdiode $D_{ZK}$, vorbeileitend die den vom Versorgungsnetz VN herkommenden Stromfluss bzw. Zwischenkreisdiodenstrom $I_{DZK}$ am zusätzlichen Energiespeicher $C_{ES}$, kann, wie in Fig. 3 dargestellt, als Standard-Diode realisiert oder wie bereits auch als nahezu ideale Diode mit einem Transistor (geringerer Durchlasswiderstand) realisiert sein/werden.

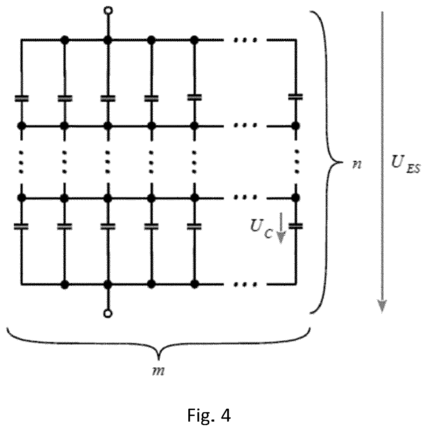

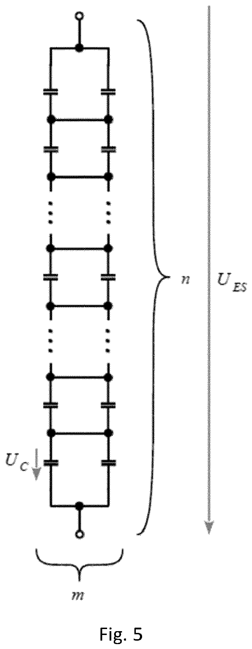

Figuren 4 und 5 stellen zwei Beispiele für einen möglichen Aufbau des zusätzlichen Energiespeichers $C_{ES}$ dar. Der zusätzliche Energiespeicher $C_{ES}$ kann auf einen gewünschten Spannungsbereich ausgelegt werden, der entsprechend niedrig gehalten werden kann, um Speichertechnologien mit niedrigen Spannungen zu begünstigen. Umfasst der zusätzliche Energiespeicher $C_{ES}$ beispielsweise einen oder eine Vielzahl von Kondensator/en umfassend eines von einem DLC (Double Layer Capacitors), Goldcap und Supercap bzw. eine Kombination davon, besitzt der zusätzliche Energiespeicher $C_{ES}$ typischerweise sehr große Kapazitätswerte $c_{ES}$

bei eher geringen Spannungsfestigkeiten. Durch die freie Festlegung der gewünschten Speicherspannung $U_{ES}$ bzw. der gesamten Speicherorganisation kann die Struktur des zusätzlichen Energiespeichers $C_{ES}$ nach Bedarf bzw. Wunsch ausgelegt werden.

Fig. 4 entspricht einem Array umfassend einer Parallelschaltung von m Kondensatorsträngen, die wiederum aus einer Reihenschaltung von n Kondensatoren bestehen. Die Anzahl n der in Reihe geschalteten Kondensatoren ist abhängig von der Kondensatorspannung $U_c$ jedes einzelnen Kondensators und der an den zusätzlichen Energiespeicher $C_{ES}$ angelegten gewünschten Speicherspannung $U_{ES}$. Es gilt:

$$U_{ES} = n \cdot U_c$$

Für eine Ladung $Q_{ES}$ des zusätzlichen Energiespeicher $C_{ES}$ gilt, dass die Ladung QES dem Produkt aus Kapazitätswert $c_{ES}$ des zusätzlichen Energiespeichers $C_{ES}$ und der gewünschten Speicherspannung $U_{ES}$ bzw. dem Speicherstrom $I_{ES}$ über die Zeit t entspricht:

$$Q_{ES} = c_{ES} \cdot U_{ES} = I_{ES} \cdot t$$

Für eine gespeicherte Energiemenge $E_{ES}$ des zusätzlichen Energiespeicher $C_{ES}$ gilt, dass die gespeicherte Energiemenge $E_{ES}$ dem Produkt aus Kapazitätswert $c_{ES}$ des zusätzlichen Energiespeichers $C_{ES}$ und der gewünschten Speicherspannung $U_{ES}$ zum Quadrat entspricht:

$$E_{ES} = \frac{1}{2} c_{ES} \cdot U_{ES}{}^2$$

Für die durch die maximal zulässige Kondensatorspannung begrenzte maximale Ladung $Q_{ES}$ als auch für die maximale gespeicherte Energiemenge $E_{ES}$ ist es nicht relevant, ob die gleiche Anzahl an Kondensatoren parallel, parallel und in Reihe oder nur in Reihe geschaltet werden. Mit anderen Worten bleiben die maximale Ladung $Q_{ES}$ als auch die maximale gespeicherte Energiemenge $E_{ES}$ bei beliebigem Array, also bei beliebiger m x n - Anordnung, gleich. Es kann immer gleich viel Energie im zusätzlichen Energiespeicher $C_{ES}$ gespeichert werden.

Eine Parallelschaltung von Kondensatoren ist technologisch ohne besondere Maßnahmen realisierbar. Bei einer Reihenschaltung muss dafür gesorgt werden, dass die Kondensatoren mit gleicher Spannung geladen werden, was durch eine Schaltung, die als Balancing-Schaltung bezeichnet wird, erreicht werden kann. Hier gibt es mehr oder weniger aufwändige Schaltungsprinzipien, die sich in Qualität und Effizienz unterscheiden, so auch bei der Reihenschaltung innerhalb mehreren parallelgeschalten Kondensatoren. Daraus folgt, dass sich eine bevorzugte m x n - Anordnung des zusätzlichen Energiespeichers $C_{ES}$ aus der Gesamtkonstruktion des Antriebssystems ergibt und auch eine Aufteilung des zusätzlichen Energiespeichers $C_{ES}$ in mehrere Blöcke und mehrere Stromquellenschaltungen SQS möglich sein kann.

Funktionen des Stromquellenschaltung

Wird bei unidirektionaler Funktion der Stromquellenschaltung SQS die Anlage A hochgefahren, schaltet die Zwischenkreisdiode $D_{ZK}$ durch und Strom fließt vom Versorgungsnetz VN über den Zwischenkreis ZK, vorbei am zusätzlichen Energiespeicher $C_{ES}$, über den Inverter I zur Anlage A. Wird die Anlage A abgebremst, sperrt die Zwischenkreisdiode $D_{ZK}$ und die Rückspeiseenergie wird in den Zwischenkreis ZK rückgespeist, wodurch die Eingangszwischenkreisspannung $U_{ZKE}$ ansteigt. Wenn die Eingangszwischenkreisspannung $U_{ZKE}$ um den Differenzwert $\Delta U$ angestiegen ist, stellt sich an der Stromquellenschaltung SQS der Stromanteil $I_S$ ein, der genau dem Wert von Kondensatorstrom $i_C$ gleich Speicherstrom $I_{ES}$ entspricht. Dadurch wird der Kondensatorstrom $i_C$ zu Null und die Eingangszwischenkreisspannung $U_{ZKE}$ bleibt konstant. Der zusätzliche Energiespeicher $C_{ES}$ wird durch diesen Vorgang geladen. Der zusätzliche Energiespeicher $C_{ES}$ wird derart ausgelegt, um die rückgespeiste Rückspeiseenergie vollständig aufnehmen zu können. Kommt es trotzdem zu einer Überfüllung des zusätzlichen Energiespeichers $C_{ES}$, z.B. im Rahmen einer Notabschaltung, kann mit einem zusätzlich vorhandenen Chopper-Widerstand $R_{Ch}$ überschüssige Energie in Form von Wärme in die Umgebung abgeben werden. Ferner wäre eine zusätzliche Rückspeiseenergiespeicherschaltung möglich.

Wird die Anlage A nach dem Abbremsen wieder hochgefahren, so wird der zusätzliche Energiespeicher $C_{ES}$ entladen. Zusätzlich wird Netzleistung $P_{Netz}$ entsprechend dem Verhältnis zwischen Eingangszwischenkreisspannung $U_{ZKE}$ zu Speicherspannung $U_{ES}$ aus dem Versorgungsnetz VN entzogen. Ist der zusätzliche Energiespeicher $C_{ES}$ leer, wir die volle Netzleistung $P_{Netz}$ aus dem Versorgungsnetz VN bezogen. Bei dieser Art der Energiespeicherung wird nicht zuerst die komplette Speicherenergie abgegeben und dann die fehlende Energie aus dem Versorgungsnetz VN bezogen, sondern es findet ein paralleler Energiebezug aus dem Versorgungsnetz VN und dem zusätzlichen Energiespeicher $C_{ES}$ statt. Somit ist eine bestimmte Zeit nötig, in der die Anlage A Energie aufnimmt, bis der zusätzliche Energiespeicher $C_{ES}$ entladen ist. Es existieren oftmals Anlagen, bei welchen eine derartig einfach gehaltene Realisierung angewendet werden kann.

Wird bei bidirektionaler Funktion der Stromquellenschaltung SQS die Anlage A hochgefahren, schaltet die Zwischenkreisdiode $D_{ZK}$ durch und Strom fließt vom Versorgungsnetz VN über den Zwischenkreis ZK, vorbei am zusätzlichen Energiespeicher $C_{ES}$, über den Inverter I zur Anlage A. Wird die Anlage A abgebremst, sperrt die Zwischenkreisdiode $D_{ZK}$ und die Rückspeiseenergie wird in den Zwischenkreis ZK rückgespeist, wodurch die Eingangszwischenkreisspannung $U_{ZKE}$ ansteigt. Wenn die Eingangszwischenkreisspannung $U_{ZKE}$ um den Differenzwert $\Delta U$ angestiegen ist, stellt sich an der Stromquellenschaltung SQS genau der Stromfluss ein, der genau dem Wert von Kondensatorstrom $i_C$ gleich Speicherstrom $I_{ES}$ entspricht. Dadurch wird der Kondensatorstrom $i_C$ zu Null und die Eingangszwischenkreisspannung $U_{ZKE}$ bleibt konstant. Der zusätzliche Energiespeicher $C_{ES}$ wird durch diesen Vorgang geladen. Der zusätzliche Energiespeicher $C_{ES}$ wird derart ausgelegt, um die rückgespeiste Rückspeiseenergie vollständig aufnehmen zu können. Kommt es trotzdem zu einer Überfüllung des zusätzlichen Energiespeichers $C_{ES}$, z.B. im Rahmen einer Notabschaltung, kann mit dem zusätzlich vorhandenen Chopper-Widerstand $R_{Ch}$ überschüssige Energie in Form vom Wärme in die Umgebung abgeben werden. Ferner wäre eine zusätzliche Rückspeiseenergiespeicherschaltung möglich.

Wird die Anlage A nach dem Abbremsen wieder hochgefahren und ist der zusätzliche Energiespeicher $C_{ES}$ durch einen vorausgegangenen Stopp der Anlage A oder durch eine Vorladung aus dem öffentlichen Versorgungsnetz VN geladen, so wird die Energie für den Beschleunigungsvorgang der Anlage A verwendet und der zusätzliche Energiespeicher $C_{ES}$ entladen.

Beim Hochfahren der Anlage A baut sich ein Ausgangszwischenkreisstrom $I_{ZKA}$ auf. Dieser Ausgangszwischenkreisstrom $I_{ZKA}$ entspricht bei bidirektionaler Funktion der Stromquellenschaltung SQS genau dem negativen Speicherstrom $I_{ES}$. Damit ein Eingangszwischenkreisstrom $I_{ZKE}$ und der Kondensatorstrom $i_C$ zu Null bleiben, muss sich an der Stromquellenschaltung SQS ein negativer Strom einstellen, der genau dem Betrag des Speicherstroms $I_{ES}$ entspricht. Die Eingangszwischenkreisspannung $U_{ZKE}$ bleibt dabei konstant und liegt um den Differenzwert $\Delta U$ so lange erhöht, bis der zusätzliche Energiespeicher $C_{ES}$ entladen wird. Ist der zusätzliche Energiespeicher $C_{ES}$ entladen, verringert sich die Eingangszwischenkreisspannung $U_{ZKE}$ um den Differenzwert $\Delta U$, auch der Zwischenkreisspeicher C entlädt sich dabei, und es wird die benötigte Energie aus dem öffentlichen Versorgungsnetz VN bezogen.

Im Unterschied zur unidirektionalen Funktion der Stromquellenschaltung SQS wird bei der bidirektionalen Funktion der Stromquellenschaltung SQS zuerst die gesamte für den Anlauf der Anlage A benötigte Energie vollständig aus dem zusätzlichen Energiespeicher $C_{ES}$ entzogen, bis dieser zusätzliche Energiespeicher $C_{ES}$ leer ist. Erst anschließend wird die Energie aus dem öffentlichen Versorgungsnetz VN bezogen.

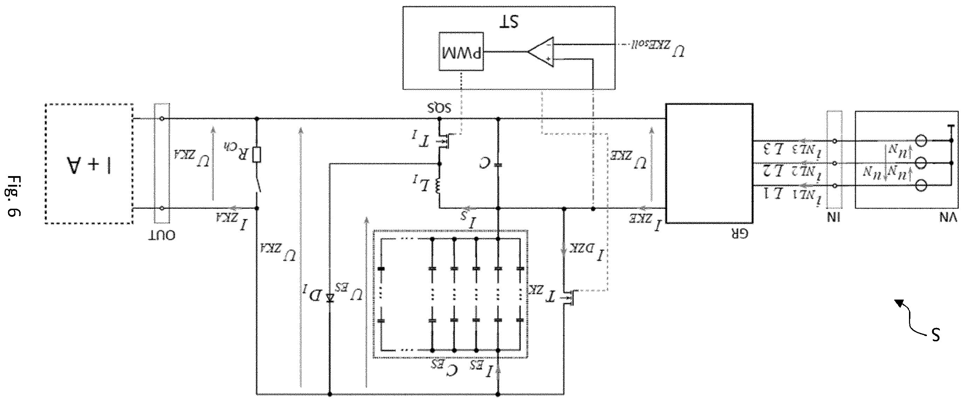

Fig. 6 stellt eine Schaltungsvorrichtung S gemäß einem zweiten Aspekt mit unidirektionaler Funktion der Stromquellenschaltung SQS dar. Die Schaltungsvorrichtung S gemäß Fig. 6 unterscheidet sich von der Schaltungsvorrichtung S nach Fig. 3 lediglich durch einige zusätzliche Komponenten. Daher werden gleiche Komponenten mit gleichen Bezugszeichen beschriftet und nicht näher beschrieben.

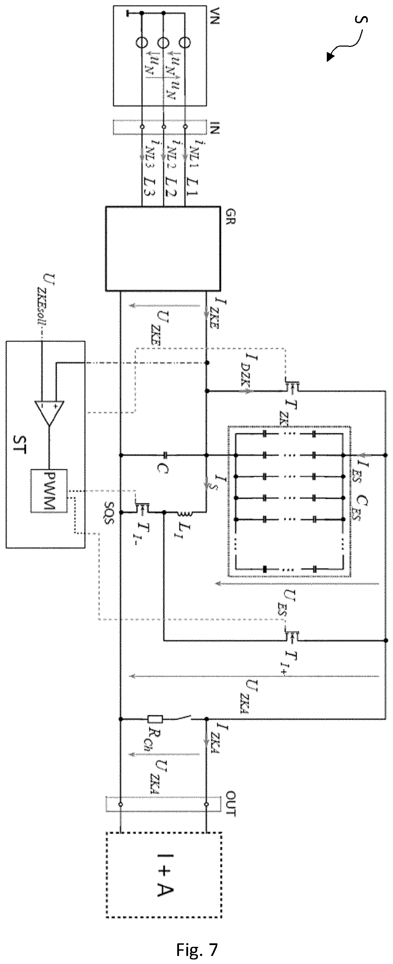

Bei der Schaltungsvorrichtung S gemäß Fig. 6 und Fig. 7 wird der zusätzliche Energiespeicher $C_{ES}$ durch das Array, umfassend der Parallelschaltung von m Kondensatorsträngen, die wiederum aus der Reihenschaltung von n Kondensatoren bestehen (siehe Fig. 4), aufgebaut. Der Aufbau des zusätzlichen Energiespeichers $C_{ES}$ ist in Fig. 6 und Fig. 7 ist rein exemplarisch gewählt und dient lediglich als eines von mehreren möglichen Beispielen (siehe oben) zur Erläuterung.

Die Zwischenkreisdiode $D_{ZK}$ aus Fig. 3 kann ferner durch einen Zwischenkreistransistor $T_{ZK}$ ersetzt und durch die Steuerung ST angesteuert werden. Die Steuerung ST gibt, nach dem Abgleich zwischen der Eingangszwischenkreis-Soll-Spannung $U_{ZKEsoll}$ und der Eingangszwischenkreisspannung $U_{ZKE}$, ein durch eine Pulsweitenmodulation PWM moduliertes Signal an einen Transistor $T_I$ weiter, um den Stromanteil Is von der Stromquellenschaltung SQS einzustellen.

Fig.7 stellt eine Schaltungsvorrichtung S gemäß einem dritten Aspekt mit bidirektionaler Funktion der Stromquellenschaltung SQS dar. Die Schaltungsvorrichtung S in Fig. 3 unterscheidet sich von der Schaltungsvorrichtung S in Fig. 6 lediglich durch ein paar Komponenten. Daher werden gleiche Komponenten mit gleichen Bezugszeichen beschriftet und nicht näher beschrieben.

Bei der Schaltungsvorrichtung S in Fig. 7 wird die Diode $D_I$ durch einen zweiten Transistor $T_{I+}$ ersetzt. Die Steuerung ST gibt, nach dem Abgleich zwischen der Eingangszwischenkreis-Soll-Spannung $U_{ZKEsoll}$ und der Eingangszwischenkreisspannung $U_{ZKE}$, ein durch eine Pulsweitenmodulation PWM moduliertes Signal an den ersten Transistor $T_{I-}$ und den zweiten Transistor $T_{I+}$ weiter, um den Stromanteil $I_S$ von der Stromquellenschaltung SQS einzustellen.

Betriebsszenarien

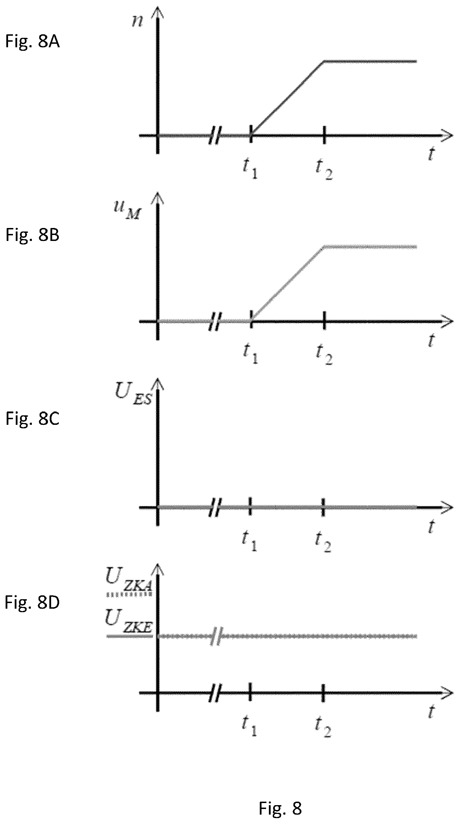

Im Folgenden werden in Bezug auf die Figuren 8A bis 19D Kennlinien von drei Betriebsszenarien, Anlauf und Betrieb bei entladenem zusätzlichen Energiespeicher, Abbremsen und Laden des zusätzlichen Energiespeichers sowie Anlauf und Betrieb mit Entladung des zusätzlichen Energiespeichers auf Grundlage der drei Ausführungsformen der Schaltvorrichtung S beschrieben. Für die Kennlinien gilt, folgendes:

- Die Kennlinien zeigen nur einige Auszüge von sehr vielen verschiedenen Konstellationen.
- Die Kennlinien gelten für alle Antriebsarten, die elektrische Energie in mechanische und umgekehrt umwandeln. Diese umfassen z.B. die folgenden Grundprinzipien von Motoren: Synchronmaschinen (SM), Asynchronmaschinen (ASM), Switched Reluctance-Motoren (SR-Motoren), DC-Motoren sowie Allstrommotoren.

- Die Kennlinien sind mit der Annahme eines Wirkungsgrads von 100 % dargestellt und ändern sich entsprechend bei Berücksichtigung des Wirkungsgrads.
- Die Kennlinien sind mit konstantem Lastmoment dargestellt. Bei linear ansteigendem Lastmoment bzw. Anstieg höherer Ordnung verändern sich Kennlinienverläufe entsprechend.
- Die Kennlinien sind für ein bestimmtes Motordrehmoment $M_M$ dargestellt. Das Motordrehmoment umfasst ein Lastmomenten $M_L$ und ein Beschleunigungsmoment MB und kann bei unterschiedlichen Lastmomenten $M_L$ und Beschleunigungsmomenten MB entsprechend variieren. Ein expliziter Leerlauf wird nicht dargestellt, da auch das Lastmoment gegen Null dem Leerlauf entspricht.
- Die benötigte Rückspeiseenergie kann von mehreren am Ausgang OUT parallel-angeschlossenen Anlagen A stammen, wobei der Einfachheit halber nur von einer angeschlossenen Anlage A am Ausgang OUT ausgegangen wird. Die Kennlinien ändern sich entsprechend, falls mehrere parallele Anlagen A am Ausgang OUT der Schaltungsvorrichtung angeschlossen werden.
- Die Energie entspricht dem Integral der Leistung über der Zeit, also der Fläche unter der Leistungskurve. Es gilt

$$E = \int_0^T P(t)\, dt$$

- Die Kennlinien zeigen der Einfachheit halber linear ansteigende und abfallende Kennlinien und Geraden. Auch Kennlinien, die nichtlineares Verhalten aufweisen, werden der Einfachheit halber linearisiert. Natürlich können die Kennlinien durch entsprechende Betriebsbedingungen und Arbeitspunkte des Antriebssystems alle denkbaren Nichtlinearitäten annehmen.
- Eine Anlage A muss nicht fortlaufend mit Nenndaten (Nennenergie $E_{Nenn}$, Nennleistung $P_{Nenn}$, Nennstrom $I_{Nenn}$, ...) betrieben werden, es kann auch ein Betrieb unter den Nennwerten stattfinden. Diese Größen könne sich auch während eines Arbeitszyklusses einer Anlage, unter Umständen sogar mehrfach, ändern. Somit sind weitere Kennlinienverläufe möglich.
- Bei den Kennlinien von Netz- und Motorströmen wird ein Effektivwert als gemeinsame Kennlinie für alle Phasen dargestellt.

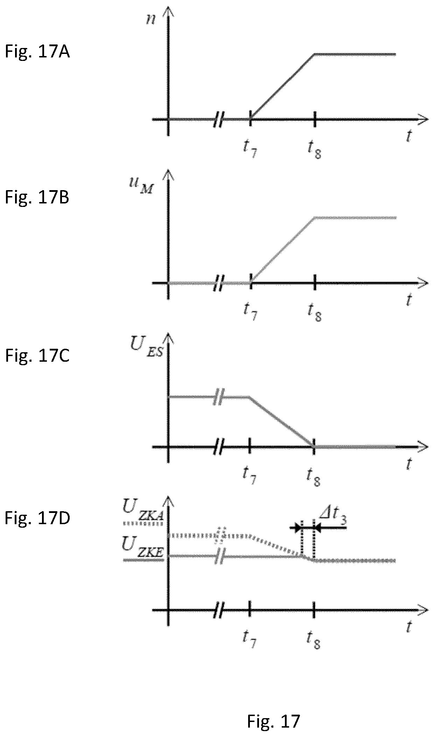

Bei den folgenden Kennlinien werden der Leerlauf und der Lastfall nicht einzeln und getrennt voneinander betrachtet. Vielmehr wird eine bestimmte Last angenommen, da der Leerlauf einer Last mit Wert Null entspricht. Dies wirkt sich insbesondere auf die Kennlinien des vierten Betriebsszenarios (siehe Fig. 7 in Kombination mit Figuren 17A bis 19D) aus, bei welchen der zusätzliche Energiespeicher $C_{ES}$ zuerst vollständig entleert wird, bevor eine Leistung aus dem Versorgungsnetz VN bezogen wird. Dies bewirkt, dass der zusätzliche Energiespeicher $C_{ES}$, je nach Last, mehr oder weniger leer ist, bevor die Anlage A beschleunigt. In diesem Fall bezieht die Anlage A aus dem Versorgungsnetz VN einen Netzstrom-Spitzenwert, der höher als der Nennstrom $I_{Nenn}$ der Anlage A ist.

Erstes Betriebsszenario (Anlauf der Anlage)

Figuren 8A bis 10D zeigen Kennlinien für den Anlauf und Betrieb der Anlage A bei entladenem zusätzlichen Energiespeicher $C_{ES}$. Diese Kennlinien entsprechen ferner dem ersten Hochfahren der Anlage A. Die Stromquellenschaltung SQS ist in diesem Fall inaktiv. Zum Zeitpunkt $t_1$ wird die Zwischenkreisdiode $D_{ZK}$ (bzw. der Zwischenkreistransistor $T_{ZK}$) leitend und es fließt Strom vom Versorgungsnetz VN über den Zwischenkreis ZK, vorbei am zusätzlichen Energiespeicher $C_{ES}$, über den Inverter I zur Anlage A. Zum Zeitpunkt $t_2$ ist das Hochfahren der Anlage A abgeschlossen.

Fig. 8A stellt eine Drehzahl-Kennlinie bzw. n-Kennlinie einer Drehzahl n über die Zeit dar. Die Drehzahl n der Anlage steigt von einem Wert Null zum Zeitpunkt $t_1$ linear bis zu einem bestimmten Wert größer Null zum Zeitpunkt $t_2$ an, von wo an die Drehzahl n konstant bleibt. Mit anderen Worten, die Anlage A fährt aus dem Stillstand linear bis zu einer bestimmten (weitgehend konstanten) Drehzahl n hoch.

Fig. 8B stellt eine Maschinenspannungs-Kennlinie bzw. $U_M$-Kennlinie einer Maschinenspannung $U_M$ über die Zeit dar. Die Maschinenspannung $U_M$ steigt entsprechend zu der Drehzahl n der Anlage A von einem Wert Null linear zum Zeitpunkt $t_1$ bis zu einem bestimmten Wert größer Null zum Zeitpunkt $t_2$ an, von wo an die Maschinenspannung $U_M$ konstant bleibt.

Fig. 8C stellt die Speicherspannungs-Kennlinie bzw. UES-Kennlinie der Speicherspannung $U_{ES}$ über die Zeit dar. Die Speicherspannung $U_{ES}$ bleibt während des Anlaufs auf einem Wert Null.

Fig. 8D stellt eine Eingangszwischenkreisspannungs-Kennlinien bzw. $U_{ZKE}$-Kennlinie der Eingangszwischenkreisspannung $U_{ZKE}$ und eine Ausgangszwischenkreisspannungs-Kennlinien bzw. $U_{ZKA}$-Kennlinie der Ausgangszwischenkreisspannung $U_{ZKA}$ über die Zeit dar. Die Eingangszwischenkreisspannung $U_{ZKE}$ bleibt auf einem konstanten Wert ungleich Null, welcher sich aus der Dreiphasen-Gleichrichtung zusammen mit dem Zwischenkreisspeicher C und dem Zwischenkreisdiodenstrom $I_{DZK}$ ergibt. Die Ausgangszwischenkreisspannung $U_{ZKA}$ folgt entsprechend dem Verlauf der Eingangszwischenkreisspannung $U_{ZKE}$.

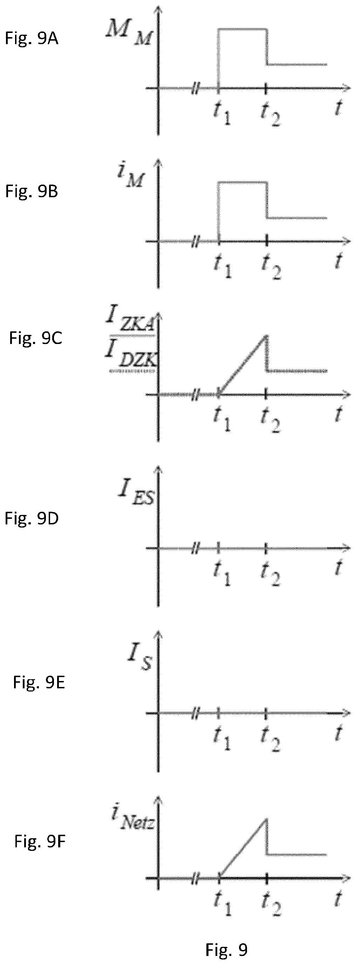

Fig. 9A stellt eine Motordrehmoment-Kennlinie bzw. $M_M$-Kennlinie des Motordrehmoments $M_M$ der Anlage A über die Zeit dar. Das Motordrehmoment $M_M$ ergibt sich aus der Summe aus dem Beschleunigungsmoment $M_B$ und dem Lastmoment $M_L$ und entspricht der benötigten Energiemenge für das Hochfahren der Anlage A vom Zeitpunkt $t_1$ bis zum Zeitpunkt $t_2$. So ist das Motordrehmoment $M_M$ beim Hochfahren bis zum Erreichen der konstanten Drehzahl n zum Zeitpunkt $t_2$ höher als nach Erreichen der Drehzahl n zum Zeitpunkt $t_2$.

Fig. 9B stellt eine Maschinenstrom-Kennlinie bzw. $i_M$-Kennlinie eines Maschinenstroms $i_M$ über die Zeit dar. Der Maschinenstrom $i_M$ verhält sich äquivalent zum Motordrehmoment $M_M$. So ist der Maschinenstrom $i_M$ bis zum Erreichen der konstanten Drehzahl n zwischen den Zeitpunkten $t_1$ und $t_2$, während des linearen Hochfahrens der Anlage A, höher als nach Erreichen der konstanten Drehzahl n zum Zeitpunkt t2.

Fig. 9C stellt eine Ausgangszwischenkreisstrom-Kennlinie bzw. $I_{ZKA}$-Kennlinie des Ausgangszwischenkreisstroms $I_{ZKA}$ und eine Zwischenkreisdiodenstrom-Kennlinie bzw. $I_{DZK}$-Kennlinie des Zwischenkreisdiodenstroms $I_{DZK}$ über die Zeit dar. Der Ausgangszwischenkreisstrom $I_{ZKA}$ steigt in Übereinstimmung zu dem Anstieg der Drehzahl n von einem Wert Null zum Zeitpunkt $t_1$ linear bis zu einem bestimmten Wert größer Null zum Zeitpunkt $t_2$ an, von wo an der Ausgangszwischenkreisstrom $I_{ZKA}$ auf den Wert des Maschinenstroms $i_M$ zurückgeht. Der Zwischenkreisdiodenstrom $I_{DZK}$ folgt entsprechend dem Verlauf des Ausgangszwischenkreisstroms $I_{ZKA}$.

Fig. 9D stellt eine Speicherstrom-Kennlinie bzw. $I_{ES}$-Kennlinie des Speicherstroms $I_{ES}$ des zusätzlichen Energiespeichers $C_{ES}$ über die Zeit dar. Der Speicherstrom $I_{ES}$ bleibt während des Anlaufs auf einem Wert Null.

Fig. 9E stellt eine Stromanteil-Kennlinie bzw. Is-Kennlinie des Stromanteils Is der Stromquellenschaltung SQS über die Zeit dar, welcher den Stromfluss in den zusätzlichen Energiespeicher $C_{ES}$ herstellt. Der Stromanteil $I_S$ bleibt während des Anlaufs bis zum Zeitpunkt $t_2$ und darüber hinaus beim Betrieb der Anlage A, solange keine Rückspeisung einsetzt, auf einem Wert Null.

Fig. 9F stellt eine Netzstrom-Kennlinie bzw. $i_{Netz}$-Kennlinie eines Netzstroms $i_{Netz}$ über der Zeit dar. Der Netzstrom $i_{Netz}$ folgt entsprechend dem Verlauf des Ausgangszwischenkreisstroms $I_{ZKA}$.

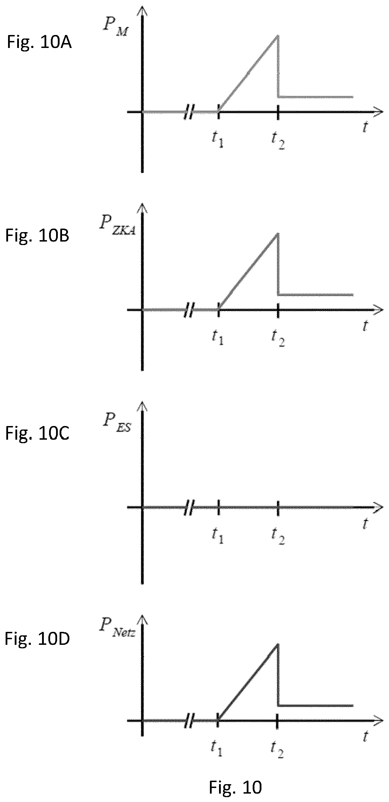

Fig. 10A stellt eine Maschinenleistungs-Kennlinie bzw. $P_M$-Kennlinie einer Maschinenleistung $P_M$ über die Zeit dar. Die Maschinenleistung $P_M$ steigt während der Beschleunigung der Anlage A konstant von einem Wert Null zum Zeitpunkt $t_1$ linear bis zu einem bestimmten Maximalwert größer Null zum Zeitpunkt $t_2$ an. Zum Zeitpunkt $t_2$ geht die Maschinenleistung $P_M$ auf einen kleineren Wert entsprechend dem Maschinenstrom $i_M$, welcher aus dem Motordrehmoment $M_M$ folgt, zurück.

Fig. 10B stellt eine Ausgangszwischenkreisleistungs-Kennlinie bzw. $P_{ZKA}$-Kennlinie einer Ausgangszwischenkreisleistung $P_{ZKA}$ über die Zeit dar. Die Ausgangszwischenkreisleistung $P_{ZKA}$ folgt entsprechend dem Verlauf des Ausgangszwischenkreisstroms $I_{ZKA}$ sowie dem Verlauf der Maschinenleistung $P_M$. Die $P_{ZKA}$-Kennlinie steigt während der Beschleunigung der Anlage A konstant von einem Wert Null zum Zeitpunkt $t_1$ linear bis zu einem bestimmten Maximalwert größer Null zum Zeitpunkt $t_2$ an. Zum Zeitpunkt $t_2$ geht die Ausgangszwischenkreisleistung $P_{ZKA}$ auf einen kleineren Wert größer Null zurück.

Fig. 10C stellt eine Speicherleistungs-Kennlinie bzw. $P_{ES}$-Kennlinie einer Speicherleistung $P_{ES}$ des zusätzlichen Energiespeichers $C_{ES}$ über die Zeit dar. Die $P_{ES}$-Kennlinie folgt entsprechend dem Verlauf der $I_{ES}$-Kennlinie. Die Speicherleistung $P_{ES}$ bleibt während des Anlaufs auf dem Wert Null.

Fig. 10D stellt eine Netzleistungs-Kennlinie bzw. $P_{Netz}$-Kennlinie einer Netzleistung $P_{Netz}$ über die Zeit dar. Die Netzleistung $P_{Netz}$ folgt in ihrem Verlauf äquivalent der Kennlinie des Netzstroms $i_{Netz}$, welche zugleich dem Verlauf des Zwischenkreisstroms $I_{ZKA}$, der ausgangsseitigen Zwischenkreisleistungs-Kennlinie $P_{ZKA}$ sowie der Maschinenleistungs-Kennlinie entspricht. Die $P_{Netz}$-Kennlinie steigt während der Beschleunigung der Anlage A konstant von einem Wert Null zum Zeitpunkt $t_1$ linear bis zu einem bestimmten Maximalwert größer Null zum Zeitpunkt $t_2$ an. Zum Zeitpunkt $t_2$ geht die Netzleistung auf einen kleineren Wert größer Null zurück.

### Zweites Betriebsszenario (Abbremsen der Anlage)

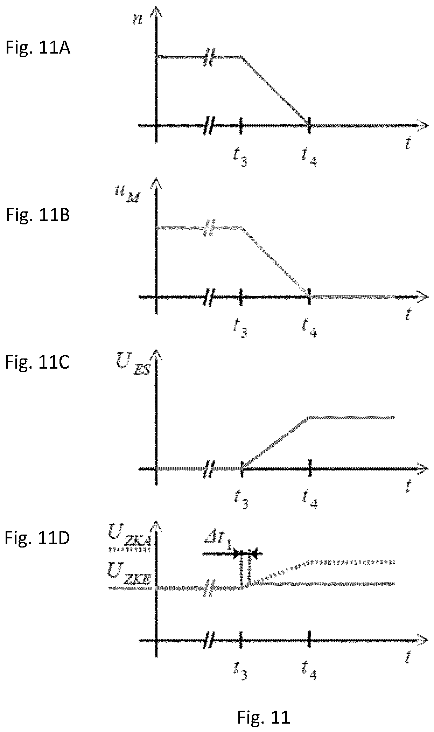

Figuren 11A bis 13D zeigen Kennlinien für ein Abbremsen der Anlage A und Laden des zusätzlichen Energiespeichers $C_{ES}$ mit Rückspeiseenergie. Für die Rückspeisung aus der Anlage A ist die Stromquellenschaltung SQS, mit beliebiger Funktion (unidirektional, bidirektional), in positiver Richtung aktiv. Wird die Anlage A abgebremst, sperrt die Zwischenkreisdiode $D_{ZK}$ (bzw. der Zwischenkreistransistor $T_{ZK}$) und die Energie wird von der Anlage A über den Inverter I in den Zwischenkreis ZK zurückgespeist. Es stellt sich ein negativer Ausgangszwischenkreisstrom $-I_{ZKA}$ ein. Die Ausgangszwischenkreisspannung $U_{ZKA}$ steigt dabei an. Dadurch steigt auch die Eingangszwischenkreisspannung $U_{ZKE}$ sowie die Speicherspannung $U_{ES}$ entsprechend dem Verhältnis zwischen dem zusätzlichen Energiespeicher $C_{ES}$ und dem Zwischenkreisspeicher C an. Die Steuerung ST erfasst die Eingangszwischenkreisspannung $U_{ZKE}$ und lässt diese um einen bestimmten Differenzwert $\Delta U$ ansteigen. Mit dem Wert

$$U_{ZKEsoll} = U_{ZKE} + \Delta U = U_N \cdot \sqrt{2}$$

wird die Stromquellenschaltung SQS aktiv und verhindert ein weiteres Ansteigen der Eingangszwischenkreisspannung $U_{ZKE}$, in dem der Stromanteil Is den Kondensatorstrom ic zu Null werden lässt. D.h. die Stromquellenschaltung SQS übernimmt den Strom. Der Stromanteil $I_S$ der Stromquellenschaltung SQS wird durch den Ist-Soll-Abgleich zwischen der Eingangszwischenkreisspannung $U_{ZKE}$ und der Eingangszwischenkreis-Soll-Spannung $U_{Z-KEsoll}$ eingestellt. Der Chopper-Widerstand $R_{Ch}$ verhindert hierbei eine Überladung des zusätzlichen Energiespeichers $C_{ES}$.

Fig. 11A stellt eine Drehzahl-Kennlinie bzw. n-Kennlinie der Drehzahl n über die Zeit dar. Die Drehzahl n der Anlage A fällt von einem bestimmten Wert größer Null zum Zeitpunkt $t_3$ linear bis zu einem Wert gleich Null zum Zeitpunkt $t_4$ ab, von wo an die Drehzahl n konstant auf dem Wert Null bleibt d.h. die Anlage A ist nicht im Betrieb. Mit anderen Worten, die Anlage A fährt von einer bestimmten Drehzahl n bis in den Stillstand linear herunter.

Fig. 11B stellt eine Maschinenspannungs-Kennlinie bzw. $U_M$-Kennlinie der Maschinenspannung $U_M$ über die Zeit dar. Die Maschinenspannung $U_M$ fällt ab dem Zeitpunkt $t_3$ entsprechend der Drehzahl n von einem bestimmten Wert größer Null linear bis zu einem Wert gleich Null zum Zeitpunkt $t_4$ ab, von wo an die Maschinenspannung UM konstant auf dem Wert Null bleibt.

Fig. 11C stellt eine Speicherspannungs-Kennlinie bzw. $U_{ES}$-Kennlinie der Speicherspannung $U_{ES}$ über die Zeit dar. Die Speicherspannung $U_{ES}$ steigt während des Abbremsens entsprechend zu der abfallenden Drehzahl n bzw. der aus der Anlage A zurückgespeisten Rückspeiseenergie von einem Wert Null linear zum Zeitpunkt $t_3$ bis zu einem bestimmten Wert größer Null zum Zeitpunkt $t_4$ an, von wo an die Speicherspannung $U_{ES}$ konstant bleibt.

Fig. 11D stellt eine Eingangszwischenkreisspannungs-Kennlinien bzw. $U_{ZKE}$-Kennlinie der Eingangszwischenkreisspannung $U_{ZKE}$ und eine Ausgangszwischenkreisspannungs-Kennlinien bzw. $U_{ZKA}$-Kennlinie der Ausgangszwischenkreisspannung $U_{ZKA}$ über die Zeit dar. Die Eingangszwischenkreisspannung $U_{ZKE}$ steigt beim Zeitpunkt $t_3$ beginnend für eine Zeitspanne $\Delta t_1$ um den Differenzwert $\Delta U$ linear an und bleibt nach der Zeitspanne $\Delta t_1$ und diesem Anstieg um den Differenzwert $\Delta U$ bei einem konstanten Wert. Die Ausgangszwischenkreisspannung $U_{ZKA}$ steigt vom Zeitpunkt $t_3$ bis zum Zeitpunkt $t_4$ an und bleibt ab diesem Zeitpunkt auf einem Maximalwert, der sich aus der zurückgespeisten Energie ergibt.

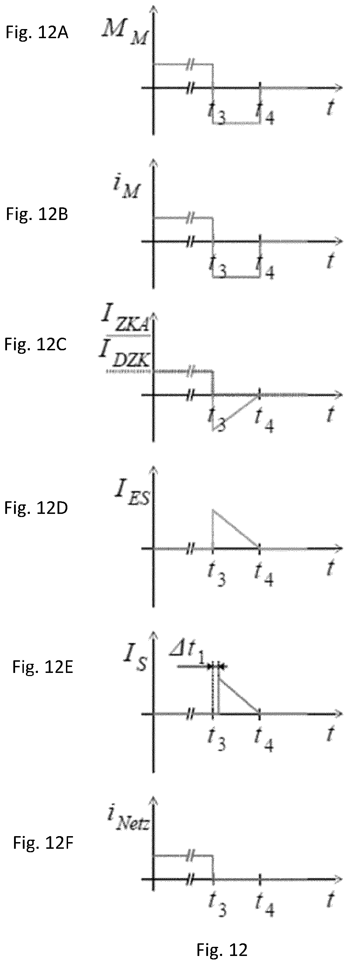

Fig. 12A stellt eine Motordrehmoment-Kennlinie bzw. $M_M$-Kennlinie des Motordrehmoments $M_M$ über die Zeit dar. Das Motordrehmoment $M_M$ ergibt sich aus der Summe aus dem negativen Beschleunigungsmoment $-M_B$ beim Abbremsen und dem Lastmoment $M_L$ und ist äquivalent zur freiwerdenden Energiemenge beim Abbremsen der Anlage A zwischen dem Zeitpunkt $t_3$ und dem Zeitpunkt $t_4$. Das Motordrehmoment $M_M$ ist somit beim Herunterfahren der Anlage A, ausgehend von einer konstanten Drehzahl n größer Null bis zum Stillstand (Drehzahl n gleich Null) zum Zeitpunkt $t_4$ negativ.

Ab dem Zeitpunkt $t_4$ bleibt das Motordrehmoment $M_M$ konstant auf dem Wert Null, da die Anlage A nicht im Betrieb ist.

Fig. 12B stellt eine Maschinenstrom-Kennlinie bzw. $i_M$-Kennlinie des Maschinenstroms $i_M$ über die Zeit dar. Der Maschinenstrom $i_M$ verhält sich äquivalent zum Motordrehmoment $M_M$. So ist der Maschinenstrom $i_M$ ausgehend von der konstanten Drehzahl $n$ bis zum Zeitpunkt $t_3$ negativ ungleich Null und wird mit dem Erreichen des Zeitpunkts $t_4$ gleich Null.

Fig 12C stellt eine Ausgangszwischenkreisstrom-Kennlinie bzw. $I_{ZKA}$-Kennlinie des Ausgangszwischenkreisstroms $I_{ZKA}$ und eine Zwischenkreisdiodenstrom-Kennlinie bzw. $I_{DZK}$-Kennlinie des Zwischenkreisdiodenstroms $I_{DZK}$ über die Zeit dar. Der Ausgangszwischenkreisstrom $I_{ZKA}$ ist zunächst positiv ungleich Null, wird zu Beginn des Abbremsvorgangs zum Zeitpunkt $t_3$ negativ und steigt dann bis zum Stillstand der Anlage A zum Zeitpunkt $t_4$ linear bis zum Wert Null an. Der Zwischenkreisdiodenstrom $I_{DZK}$ wird mit dem Beginn des Abbremsvorgangs bzw. dem Beginn der Rückspeisung zum Zeitpunkt $t_3$ gleich Null.

Fig. 12D stellt eine Speicherstrom-Kennlinie bzw. $I_{ES}$-Kennlinie des Speicherstroms $I_{ES}$ über die Zeit dar. Der Speicherstrom $I_{ES}$ ist bis zum Zeitpunkt $t_3$ konstant gleich Null. Mit dem Beginn des Abbremsvorgangs zum Zeitpunkt $t_3$ springt der Speicherstrom $I_{ES}$ auf einen bestimmten Wert größer Null und fällt dann bis zum Stillstand zum Zeitpunkt $t_4$ linear bis zum Wert Null ab. Während dieser Zeit fließt der Speicherstrom $I_{ES}$ in den zusätzlichen Energiespeicher $C_{ES}$, wodurch der zusätzliche Energiespeicher $C_{ES}$ geladen wird.

Fig. 12E stellt eine Stromanteil-Kennlinie bzw. Is-Kennlinie des Stromanteils Is der Stromquellenschaltung SQS über die Zeit dar. Bis zum Zeitpunkt $t_3 + \Delta t_1$ ist der Stromanteil $I_S$ gleich Null und springt zum Zeitpunkt $t_3 + \Delta t_1$, bis die Eingangszwischenkreisspannung $U_{ZKE}$ um den Differenzwert $\Delta U$ ansteigt, auf einen bestimmten Wert größer Null, entsprechend dem momentanen Speicherstrom $I_{ES}$ und fällt dann entsprechend dem Speicherstrom $I_{ES}$ bis zum Stillstand der Anlage A zum Zeitpunkt $t_4$ linear bis zum Wert Null ab.

Fig. 12F stellt eine Netzstrom-Kennlinie bzw. $i_{Netz}$-Kennlinie des Netzstroms $i_{Netz}$ über der Zeit dar. Der Netzstrom $i_{Netz}$ wird mit dem Beginn des Abbremsvorgangs bzw. dem Beginn der Rückspeisung zum Zeitpunkt $t_3$ zu Null und bleibt auf dem Wert Null.

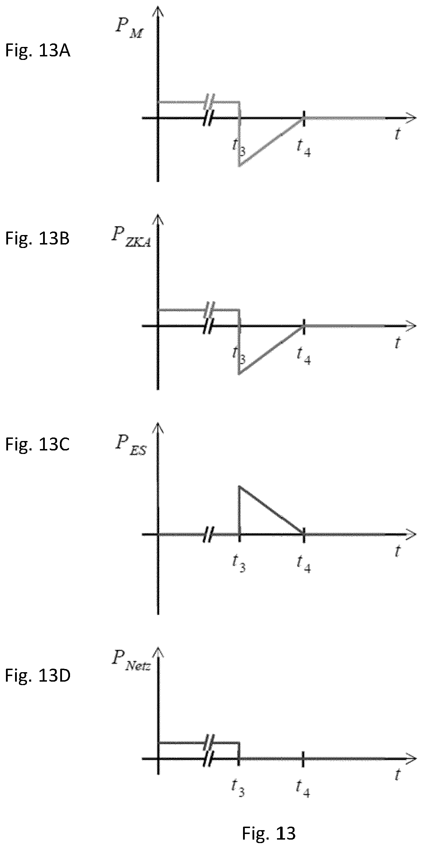

Fig. 13A stellt eine Maschinenleistungs-Kennlinie bzw. $P_M$-Kennlinie der Maschinenleistung $P_M$ über die Zeit dar. Die Maschinenleistung $P_M$ wird zu Beginn des Abbremsvorgangs zum Zeitpunkt $t_3$ negativ und steigt dann bis zum Stillstand der Anlage A zum Zeitpunkt $t_4$ linear bis zum Wert Null an.

Fig. 13B stellt eine Ausgangszwischenkreisleistungs-Kennlinie bzw. $P_{ZKA}$-Kennlinie der Ausgangszwischenkreisleistung $P_{ZKA}$ über die Zeit dar. Die Ausgangszwischenkreisleistung $P_{ZKA}$ folgt entsprechend dem Verlauf des Ausgangszwischenkreisstroms $I_{ZKA}$ sowie dem Verlauf der Maschinenleistung $P_M$. Die $P_{ZKA}$-Kennlinie wird zu Beginn des Abbremsvorgangs zum Zeitpunkt $t_3$ negativ und steigt dann bis zum Stillstand der Anlage A zum Zeitpunkt $t_4$ linear bis zum Wert Null an.

Fig 13C stellt eine Speicherleistungs-Kennlinie bzw. $P_{ES}$-Kennlinie einer Speicherleistung $P_{ES}$ des zusätzlichen Energiespeichers $C_{ES}$ über die Zeit dar. Die $P_{ES}$-Kennlinie folgt entsprechend dem Verlauf der $I_{ES}$-Kennlinie. Mit dem Beginn des Abbremsvorgangs zum Zeitpunkt $t_3$ springt die Speicherleistung $P_{ES}$ auf einen bestimmten Wert größer Null und fällt dann bis zum Stillstand der Anlage A zum Zeitpunkt $t_4$ linear bis zum Wert Null ab.

Fig 13D stellt eine Netzleistungs-Kennlinie bzw. $P_{Netz}$-Kennlinie der Netzleistung $P_{Netz}$ über die Zeit dar. Die Netzleistung $P_{Netz}$ folgt in ihrem Verlauf äquivalent der Kennlinie des Netzstroms $i_{Netz}$. Die Netzleistung $P_{Netz}$ wird mit dem Beginn des Abbremsvorgangs bzw. dem Beginn der Rückspeisung zum Zeitpunkt $t_3$ Null und bleibt auf dem Wert Null.

Drittes Betriebsszenario (Wiederanlauf der Anlage A)

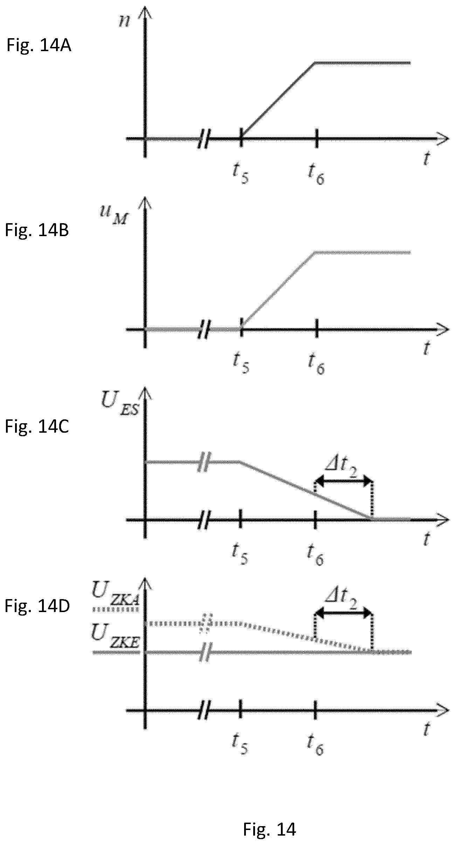

Figuren 14A bis 16D zeigen Kennlinien für den Anlauf und Betrieb der Anlage A mit der Schaltungsvorrichtung S nach Fig. 6 mit Entladung des zusätzlichen zum Zeitpunkt $t_5$ geladenen Energiespeichers $C_{ES}$ und Stromquellenschaltung SQS mit unidirektionaler Funktion. Dies entspricht ferner dem Wiederanlauf der Anlage A. Die Stromquellenschaltung SQS ist in diesem Fall nicht aktiv, da sie nur einen positiven Strom führen kann. Zum Zeitpunkt $t_5$ wird die Anlage A hochgefahren und die dafür benötigte Energie gleichzeitig im Verhältnis zwischen Eingangszwischenkreisspannung $U_{ZKE}$ zu Speicherspannung $U_{ES}$ aus dem zusätzlichen Energiespeicher $C_{ES}$ und dem öffentlichen Versorgungsnetz VN entzogen. Die Zwischenkreisdiode $D_{ZK}$ wird leitend, sobald der zusätzliche Energiespeicher $C_{ES}$ entladen ist/wird.

Fig. 14A stellt eine Drehzahl-Kennlinie bzw. n-Kennlinie der Drehzahl $n$ über die Zeit dar. Die Drehzahl $n$ der Anlage A steigt von einem Wert Null zum Zeitpunkt $t_5$ linear bis zu einem bestimmten Wert größer Null zum Zeitpunkt $t_6$ an, von wo an die Drehzahl $n$ konstant bleibt. Mit anderen Worten, die Anlage A fährt aus dem Stillstand linear bis zu einer bestimmten Drehzahl $n$ hoch.

Fig. 14B stellt eine Maschinenspannungs-Kennlinie bzw. $U_M$-Kennlinie der Maschinenspannung $U_M$ über die Zeit dar. Die Maschinenspannung $U_M$ steigt entsprechend der Drehzahl $n$ von einem Wert Null linear zum Zeitpunkt $t_5$ bis zu einem bestimmten Wert größer Null zum Zeitpunkt $t_6$ an, von wo an die Maschinenspannung $U_M$ konstant bleibt.

Fig. 14C stellt eine Speicherspannungs-Kennlinie bzw. $U_{ES}$-Kennlinie der Speicherspannung $U_{ES}$ über die Zeit dar. Beginnend zum Zeitpunkt $t_5$ fällt die Speicherspannung $U_{ES}$ von einem konstanten Wert größer Null über den Zeitpunkt $t_6$ hinaus, für eine Zeitspanne $\Delta t_2$ linear ab. Die negative Steigung und das Erreichen des Wertes Null ist sowohl abhängig vom Spannungsverhältnis der Eingangszwischenkreisspannung $U_{ZKE}$ zur Speicherspannung $U_{ES}$, als auch von dem Zeitraum zwischen den beiden Zeitpunkten $t_5$ und $t_6$, der gespeicherten Energiemenge in dem zusätzlichen Energiespeicher $C_{ES}$ und der Last L.

Fig. 14D stellt eine Eingangszwischenkreisspannungs-Kennlinien bzw. $U_{ZKE}$-Kennlinie der Eingangszwischenkreisspannung $U_{ZKE}$ und eine Ausgangszwischenkreisspannungs-Kennlinien bzw. $U_{ZKA}$-Kennlinie der Ausgangszwischenkreisspannung $U_{ZKA}$ über die Zeit dar. Die Eingangszwischenkreisspannung $U_{ZKE}$ bleibt auf einem konstanten Wert ungleich Null, welcher sich aus der Dreiphasen-Gleichrichtung zusammen mit dem Zwischenkreisspeicher C und dem Zwischenkreisdiodenstrom $I_{DZK}$ ergibt. Beginnend zum Zeitpunkt $t_5$ fällt die Ausgangszwischenkreisspannung $U_{ZKA}$ von einem konstanten Wert größer Null über den Zeitpunkt $t_6$ hinaus, für die Zeitspanne $\Delta t_2$ linear ab. Diese negative Steigung ist sowohl abhängig vom Verhältnis zwischen Eingangszwischenkreisspannung $U_{ZKE}$ zu der Speicherspannung $U_{ES}$, als auch von dem Zeitraum zwischen den beiden Zeitpunkten $t_5$ und $t_6$, der gespeicherten Energiemenge in dem zusätzlichen Energiespeicher $C_{ES}$ und der Last L.

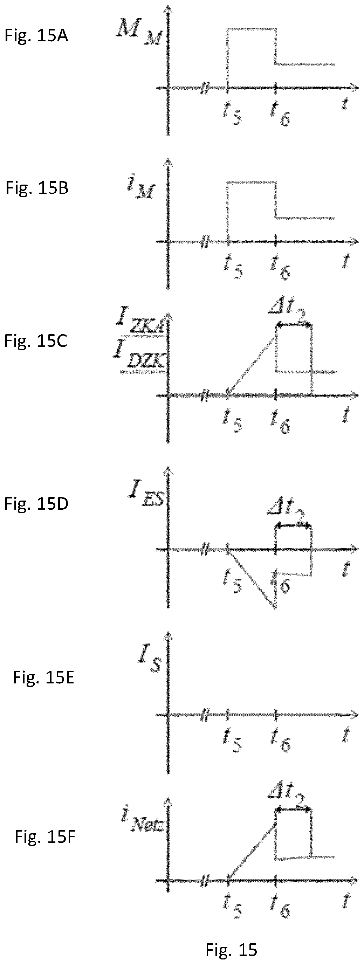

Fig. 15A stellt eine Motordrehmoment-Kennlinie bzw. $M_M$-Kennlinie des Motordrehmoments $M_M$ über die Zeit dar. Das Motordrehmoment $M_M$ ergibt sich aus der Summe aus dem Beschleunigungsmoment $M_B$ und dem Lastmoment $M_L$ und ist äquivalent zur benötigten Energiemenge für das Hochfahren der Anlage A vom Zeitpunkt $t_5$ bis zum Zeitpunkt $t_6$. So ist das Motordrehmoment $M_M$ beim Hochfahren der Anlage A bis zum Erreichen der konstanten Drehzahl n zum Zeitpunkt $t_6$ höher als nach Erreichen der Drehzahl n zum Zeitpunkt $t_6$.

Fig. 15B stellt eine Maschinenstrom-Kennlinie bzw. $i_M$-Kennlinie des Maschinenstroms $i_M$ über die Zeit dar. Der Maschinenstrom $i_M$ verhält sich äquivalent zum Motordrehmoment $M_M$. So ist der Maschinenstrom $i_M$ bis zum Erreichen der konstanten Drehzahl n zwischen den Zeitpunkten $t_5$ bis $t_6$, während des linearen Hochfahrens der Anlage A, höher als nach Erreichen der konstanten Drehzahl n zum Zeitpunkt $t_6$.

Fig. 15C stellt eine Ausgangszwischenkreisstrom-Kennlinie bzw. $I_{ZKA}$-Kennlinie des Ausgangszwischenkreisstroms $I_{ZKA}$ und eine Zwischenkreisdiodenstrom-Kennlinie bzw. $I_{DZK}$-Kennlinie des Zwischenkreisdiodenstroms $I_{DZK}$ über die Zeit dar. Der Zwischenkreisstrom $I_{ZKA}$ steigt entsprechend dem Anstieg der Drehzahl n von einem Wert Null zum Zeitpunkt $t_5$ linear bis zu einem bestimmten Wert größer Null zum Zeitpunkt $t_6$ an, von wo an der Ausgangszwischenkreisstroms $I_{ZKA}$ auf den Wert entsprechend dem Maschinenstrom $i_M$ zurückgeht. Der Zwischenkreisdiodenstrom $I_{DZK}$ bleibt auf dem Wert Null, bis der zusätzliche Energiespeicher $C_{ES}$ nach dem Zeitpunkt $t_6$ zusätzlich der Zeitspanne $\Delta t_2$ vollständig entleert ist/wird und nimmt dann schlagartig den Wert entsprechend dem Ausgangszwischenkreisstroms $I_{ZKA}$ an.

Fig. 15D stellt eine Speicherstrom-Kennlinie bzw. $I_{ES}$-Kennlinie des Speicherstroms $I_{ES}$ über die Zeit dar. Der Speicherstrom $I_{ES}$ steigt negativ linear entsprechend dem Anstieg der Drehzahl n von einem Wert Null zum Zeitpunkt $t_5$ bis zu einem bestimmten Wert kleiner Null zum Zeitpunkt $t_6$ an. Zum Zeitpunkt $t_6$ springt der Speicherstrom $I_{ES}$ schlagartig auf einen Wert kleiner Null und folgt für die Zeitspanne $\Delta t_2$ betragsmäßig dem Verlauf des Ausgangszwischenkreisstroms $I_{ZKA}$, jedoch mit negativem Vorzeichen. Ab dem Zeitpunkt $t_6$ folgt der Speicherstrom $I_{ES}$ so lange dem Verlauf des Ausgangszwischenkreisstroms $I_{ZKA}$ (mit negativem Vorzeichen), bis die Speicherspannung $U_{ES}$ gleich Null wird und somit der zusätzliche Energiespeicher $C_{ES}$ entladen ist/wird.

Fig. 15E stellt eine Stromanteil-Kennlinie bzw. Is-Kennlinie des Stromanteils Is der Stromquellenschaltung SQS über die Zeit dar welcher den Stromfluss in den zusätzlichen Energiespeicher $C_{ES}$ herstellt. Der Stromanteil $I_S$ bleibt während des Anlaufs bis zum Zeitpunkt $t_5$ und darüber hinaus beim Betrieb der Anlage A, solange keine Rückspeisung einsetzt, auf einem Wert Null.

Fig. 15F stellt eine Netzstrom-Kennlinie bzw. $i_{Netz}$-Kennlinie des Netzstroms $i_{Netz}$ über der Zeit dar. Der Netzstrom $i_{Netz}$ folgt entsprechend dem Ausgangszwischenkreisstroms $I_{ZKA}$ einschließlich des Sprungs zum Zeitpunkt $t_6$. Ab dem Zeitpunkt $t_6$ geht die Speicherspannung $U_{ES}$ für die Zeitspanne $\Delta t_2$ weiter linear zurück auf den Wert Null, d.h. in der Zeitspanne $\Delta t_2$ steigt der Netzstrom $i_{Netz}$ linear an, um die abnehmende Speicherleistung $P_{ES}$ des zusätzlichen Energiespeicher $C_{ES}$ über das öffentliche Versorgungsnetz VN zu kompensieren.

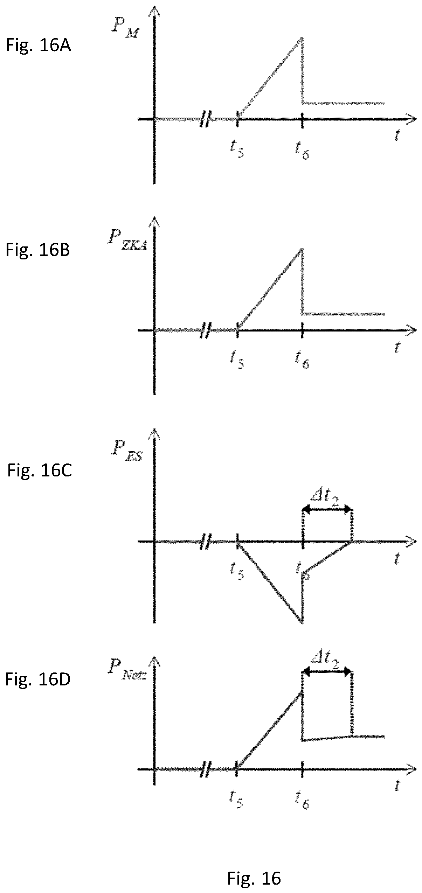

Fig. 16A stellt eine Maschinenleistungs-Kennlinie bzw. $P_M$-Kennlinie der Maschinenleistung $P_M$ über die Zeit dar. Die Maschinenleistung $P_M$ steigt während der Beschleunigung der Anlage A konstant von einem Wert Null zum Zeitpunkt $t_5$ linear bis zu einem bestimmten Maximalwert größer Null zum Zeitpunkt $t_6$ an. Zum Zeitpunkt $t_6$ geht die Maschinenleistung $P_M$ auf einen kleineren Wert entsprechend dem Maschinenstrom $i_M$, welcher aus dem Motordrehmoment $M_M$ folgt, zurück.

Fig. 16B stellt eine Ausgangszwischenkreisleistungs-Kennlinie bzw. $P_{ZKA}$-Kennlinie der Ausgangszwischenkreisleistung $P_{ZKA}$ über die Zeit dar. Die Ausgangszwischenkreisleistung $P_{ZKA}$ folgt entsprechend dem Verlauf des Ausgangszwischenkreisstroms $I_{ZKA}$ sowie dem Verlauf der Maschinenleistung $P_M$. Die $P_{ZKA}$-Kennlinie steigt während der Beschleunigung der Anlage A konstant von einem Wert Null zum Zeitpunkt $t_5$ linear bis zu einem bestimmten Maximalwert größer Null zum Zeitpunkt $t_6$ an. Zum Zeitpunkt $t_6$ geht die Ausgangszwischenkreisleistung $P_{ZKA}$ auf einen kleineren Wert größer Null zurück.

Fig. 16C stellt eine Speicherleistungs-Kennlinie bzw. $P_{ES}$-Kennlinie einer Speicherleistung $P_{ES}$ des zusätzlichen Energiespeichers $C_{ES}$ über die Zeit dar. Die $P_{ES}$-Kennlinie folgt entsprechend dem Verlauf der $I_{ES}$-Kennlinie. Die $P_{ES}$-Kennlinie steigt negativ entsprechend dem Anstieg der Drehzahl n von einem Wert Null zum Zeitpunkt $t_5$ linear bis zu einem bestimmten Wert kleiner Null zum Zeitpunkt $t_6$ an. Zum Zeitpunkt $t_6$ springt die Speicherleistung $P_{ES}$ schlagartig, entsprechend dem Speicherstrom $I_{ES}$ auf einen niedrigeren Wert kleiner Null, und verläuft dann entsprechend der Speicherspannung $U_{ES}$ linear für die Zeitspanne $\Delta t_2$ auf den Wert Null zurück.

Fig. 16D stellt eine Netzleistungs-Kennlinie bzw. $P_{Netz}$-Kennlinie der Netzleistung $P_{Netz}$ über die Zeit dar. Die Netzleistung $P_{Netz}$ folgt in ihrem Verlauf äquivalent der Kennlinie des Netzstroms $i_{Netz}$. Die $P_{ZKA}$-Kennlinie abzüglich der $P_{ES}$-Kennlinie ergibt die $P_{Netz}$-Kennlinie. Die $P_{Netz}$-Kennlinie steigt während der Beschleunigung der Anlage A konstant von einem Wert Null zum Zeitpunkt $t_5$ linear bis zu einem bestimmten Maximalwert größer Null zum Zeitpunkt $t_6$ an. Zum Zeitpunkt $t_6$ fällt die Netzleistung $P_{Netz}$ auf einen kleineren Wert größer Null und kleineren Wert als die Ausgangszwischenkreisleistung $P_{ZKA}$ zu diesem Zeitpunkt zurück und steigt nach dem Zeitpunkt $t_6$ wieder linear für die Zeitspanne $\Delta t_2$ an, bis der zusätzliche Energiespeicher $C_{ES}$ vollständig entladen ist und die Netzleistung $P_{Netz}$ identisch der Ausgangszwischenkreisleistung $P_{ZKA}$ wird.

Viertes Betriebsszenario

Figuren 17A bis 19D zeigen Kennlinien für den Anlauf und Betrieb der Anlage A mit der Schaltungsvorrichtung S nach Fig. 7 mit Entladung des zusätzlichen Energiespeichers $C_{ES}$ und Stromquellenschaltung SQS mit bidirektionaler Funktion. Dies entspricht ferner dem Wiederanlauf der Anlage A. Die Stromquellenschaltung SQS ist in diesem Fall aktiv, da die Stromquellenschaltung SQS sowohl einen positiven als auch einen negativen Strom führen kann, wobei für nachfolgenden Kennlinien nur der negative Strom benötigt wird. Zum Zeitpunkt $t_7$ wird die Anlage A hochgefahren, dazu wird zuerst die Energie vollständig aus dem zusätzlichen Energiespeicher $C_{ES}$ bezogen. Sobald der zusätzliche Energiespeicher $C_{ES}$ entladen ist, wird die Energie aus dem Versorgungsnetz VN bezogen. Dazu muss die Stromquellenschaltung SQS einen negativen Stromanteil Is erzeugen, der genau dem Wert des Ausgangszwischenkreisstroms $I_{ZKA}$ entspricht. Die Zwischenkreisdiode $D_{ZK}$ wird leitend, sobald der zusätzliche Energiespeicher $C_{ES}$ entladen ist.

Fig. 17A stellt eine Drehzahl-Kennlinie bzw. n-Kennlinie der Drehzahl n über die Zeit dar. Die Drehzahl n der Anlage A steigt von einem Wert Null zum Zeitpunkt $t_7$ linear bis zu einem bestimmten Wert größer Null zum Zeitpunkt $t_8$ an, von wo an die Drehzahl n konstant bleibt.

Mit anderen Worten, die Anlage A fährt aus dem Stillstand linear bis zu einer bestimmten Drehzahl n hoch.

Fig. 17B stellt eine Maschinenspannungs-Kennlinie bzw. $U_M$-Kennlinie der Maschinenspannung $U_M$ über die Zeit dar. Die Maschinenspannung $U_M$ steigt entsprechend der Drehzahl n von einem Wert Null zum Zeitpunkt $t_7$ linear bis zu einem bestimmten Wert größer Null zum Zeitpunkt $t_8$ an, von wo an die Maschinenspannung $U_M$ konstant bleibt.

Fig. 17C stellt eine Speicherspannungs-Kennlinie bzw. $U_{ES}$-Kennlinie der Speicherspannung $U_{ES}$ über die Zeit dar. Die Speicherspannung $U_{ES}$ fällt ab dem Zeitpunkt $t_7$ von einem bestimmten Wert größer Null linear bis zum Zeitpunkt $t_8$ auf einen Wert gleich Null ab. Danach bleibt die Speicherspannung $U_{ES}$ konstant auf dem Wert Null.

Fig. 17D stellt eine Eingangszwischenkreisspannungs-Kennlinie bzw. $U_{ZKE}$-Kennlinie der Eingangszwischenkreisspannung $U_{ZKE}$ und eine Ausgangszwischenkreisspannungs-Kennlinie bzw. $U_{ZKA}$-Kennlinie der Ausgangszwischenkreisspannung $U_{ZKA}$ über die Zeit dar. Die Eingangszwischenkreisspannung $U_{ZKE}$ bleibt auf einem konstanten Wert ungleich Null, der sich aus der Dreiphasen-Gleichrichtung zusammen mit dem Zwischenkreisspeicher C zuzüglich dem Differenzwert $\Delta U$ ergibt. Kurz vor dem Zeitpunkt $t_8$, für eine Zeitspanne $\Delta t_3$ fällt die Eingangszwischenkreisspannung $U_{ZKE}$ durch eine teilweise Entladung des Zwischenkreisspeichers C um den Differenzwert $\Delta U$ und auf einen konstanten Wert ungleich Null, der sich aus der Dreiphasen-Gleichrichtung zusammen mit dem Zwischenkreisspeicher C ergibt. Die Ausgangszwischenkreisspannung $U_{ZKA}$ fällt ab dem Zeitpunkt $t_7$, von einem bestimmten Wert größer Eingangszwischenkreisspannung $U_{ZKE}$, linear bis zum Zeitpunkt $t_8$ auf den Wert der Eingangszwischenkreisspannung $U_{ZKE}$ ab. Danach bleibt die Ausgangszwischenkreisspannung $U_{ZKA}$ konstant auf dem Wert der Eingangszwischenkreisspannung $U_{ZKE}$.

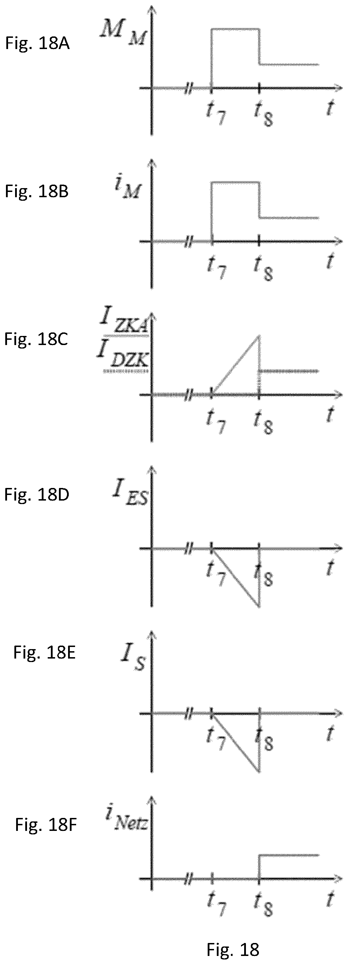

Fig. 18A stellt eine Motordrehmoment-Kennlinie bzw. $M_M$-Kennlinie des Motordrehmoments $M_M$ über die Zeit dar. Das Motordrehmoment $M_M$ ergibt sich aus der Summe aus dem Beschleunigungsmoment $M_B$ und dem Lastmoment $M_L$ und ist äquivalent zur benötigten Energiemenge für das Hochfahren der Anlage A vom Zeitpunkt $t_7$ bis zum Zeitpunkt $t_8$. So ist das Motordrehmoment $M_M$ beim Hochfahren der Anlage A bis zum Erreichen der konstanten Drehzahl n zum Zeitpunkt $t_8$ höher als nach Erreichen der Drehzahl n zum Zeitpunkt $t_8$.

Fig. 18B stellt eine Maschinenstrom-Kennlinie bzw. $i_M$-Kennlinie eines Maschinenstroms $i_M$ über die Zeit dar. Der Maschinenstrom $i_M$ verhält sich äquivalent zum Motordrehmoment $M_M$. So ist der Maschinenstrom $i_M$ bis zum Erreichen der konstanten Drehzahl n zwischen den Zeitpunkten $t_7$ bis $t_8$, während des linearen Hochfahrens der Anlage A, höher als nach Erreichen der konstanten Drehzahl n zum Zeitpunkt $t_8$.

Fig. 18C stellt eine Ausgangszwischenkreisstrom-Kennlinie bzw. $I_{ZKA}$-Kennlinie des Ausgangszwischenkreisstroms $I_{ZKA}$ und eine Zwischenkreisdiodenstrom-Kennlinie bzw. $I_{DZK}$-Kennlinie des Zwischenkreisdiodenstroms $I_{DZK}$ über die Zeit dar. Der Ausgangszwischenkreisstroms $I_{ZKA}$ steigt entsprechend dem Anstieg der Drehzahl n von einem Wert Null zum Zeitpunkt $t_7$ linear bis zu einem bestimmten Wert größer Null zum Zeitpunkt $t_8$ an, von wo an der Ausgangszwischenkreisstroms $I_{ZKA}$ auf den Wert entsprechend dem Maschinenstrom $i_M$ zurückgeht. Der Zwischenkreisdiodenstrom $I_{DZK}$ bleibt bis zum Zeitpunkt $t_8$ auf dem Wert Null und folgt ab diesem Zeitpunkt $t_8$ dem Verlauf des Ausgangszwischenkreisstroms $I_{ZKA}$.

Fig. 18D stellt eine Speicherstrom-Kennlinie bzw. $I_{ES}$-Kennlinie des Speicherstroms $I_{ES}$ über die Zeit dar. Der Speicherstrom $I_{ES}$ steigt negativ entsprechend dem Anstieg der Drehzahl n von einem Wert Null zum Zeitpunkt $t_7$ linear bis zu einem bestimmten Wert kleiner Null zum Zeitpunkt $t_8$ an, von wo an er zu Null wird und konstant auf dem Wert Null bleibt.

Fig. 18E stellt eine Stromanteil-Kennlinie bzw. Is-Kennlinie des Stromanteils Is der Stromquellenschaltung SQS über die Zeit. Der Kennlinienverlauf folgt äquivalent dem Kennlinienverlauf des Speicherstroms $I_{ES}$ gemäß Fig. 18D.

Fig. 18F stellt eine Netzstrom-Kennlinie bzw. $i_{Netz}$-Kennlinie des Netzstroms $i_{Netz}$ über der Zeit dar. Der Netzstrom $i_{Netz}$ bleibt zum Zeitpunkt $t_8$ auf dem Wert Null und folgt ab diesem Zeitpunkt dem Verlauf des Ausgangszwischenkreisstroms $I_{ZKA}$.

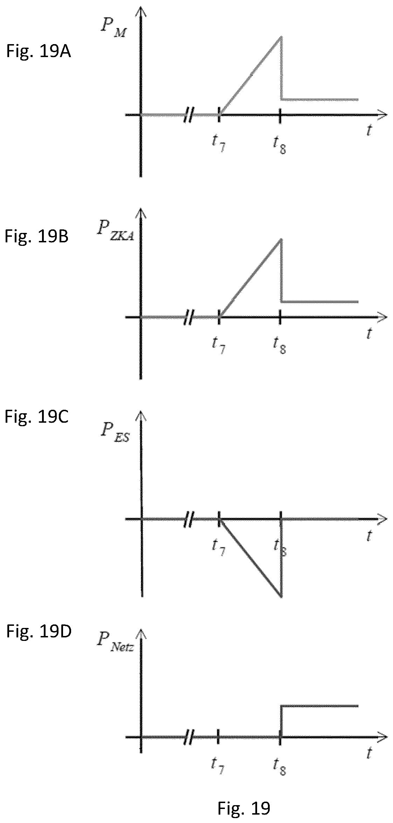

Fig. 19A stellt eine Maschinenleistungs-Kennlinie bzw. $P_M$-Kennlinie der Maschinenleistung $P_M$ über die Zeit dar. Die Maschinenleistung $P_M$ steigt während der Beschleunigung der Anlage A konstant von einem Wert Null zum Zeitpunkt $t_7$ linear bis zu einem bestimmten Maximalwert größer Null zum Zeitpunkt $t_8$ an. Zum Zeitpunkt $t_8$ geht die Maschinenleistung $P_M$ auf einen kleineren Wert entsprechend dem Maschinenstrom $i_M$, welcher aus dem Motordrehmoment $M_M$ folgt, zurück.

Fig. 19B stellt eine Ausgangszwischenkreisleistungs-Kennlinie bzw. $P_{ZKA}$-Kennlinie der Ausgangszwischenkreisleistung $P_{ZKA}$ über die Zeit dar. Die Ausgangszwischenkreisleistung $P_{ZKA}$ folgt dem Verlauf des Ausgangszwischenkreisstroms $I_{ZKA}$ sowie dem Verlauf der Maschinenleistung $P_M$. Die $P_{ZKA}$-Kennlinie steigt während der Beschleunigung der Anlage A konstant von einem Wert Null zum Zeitpunkt $t_7$ linear bis zu einem bestimmten Maximalwert größer Null zum Zeitpunkt $t_8$ an. Zum Zeitpunkt $t_8$ geht die Ausgangszwischenkreis-leistung $P_{ZKA}$ auf einen kleineren Wert größer Null zurück.

Fig. 19C stellt eine Speicherleistungs-Kennlinie bzw. $P_{ES}$-Kennlinie einer Speicherleistung $P_{ES}$ des zusätzlichen Energiespeichers $C_{ES}$ über die Zeit dar. Die $P_{ES}$-Kennlinie folgt entsprechend dem Verlauf der $I_{ES}$-Kennlinie. Die $P_{ES}$-Kennlinie steigt negativ entsprechend dem Anstieg der Drehzahl n von einem Wert Null zum Zeitpunkt $t_7$ linear bis zu einem bestimmten Wert kleiner Null zum Zeitpunkt $t_8$ an, von wo an die Speicherleistung $P_{ES}$ zu Null wird und konstant auf dem Wert Null bleibt.

Fig. 19D stellt eine Netzleistungs-Kennlinie bzw. $P_{Netz}$-Kennlinie der Netzleistung $P_{Netz}$ über die Zeit dar. Die Netzleistung $P_{Netz}$ folgt in ihrem Verlauf äquivalent der Kennlinie des Netzstroms $i_{Netz}$. Die $P_{ZKA}$-Kennlinie abzüglich der $P_{ES}$-Kennlinie ergibt die $P_{Netz}$-Kennlinie. Die Netzleistung $P_{Netz}$ bleibt bis zum Zeitpunkt $t_8$ auf dem Wert Null und folgt ab dem Zeitpunkt $t_8$ dem Verlauf der Ausgangszwischenkreisleistung $P_{ZKA}$.

**Patentansprüche**

1. Schaltungsvorrichtung (S) zur Speicherung von Rückspeiseenergie einer Anlage (A), umfassend

   einen Eingang (IN) verbunden mit dreiphasigem Versorgungsnetz (VN) über Phasen (L1, L2, L3);
   einen mit dem Eingang (IN) verbundenen Zwischenkreis (ZK) umfassend

   einen Zwischenkreisspeicher (C); und
   einen mit dem Zwischenkreis (ZK) verbunden Ausgang (OUT);

   wobei die Schaltungsvorrichtung (S) weiter umfasst

   einen in Serie zum Zwischenkreisspeicher (C) geschalteten zusätzlichen Energiespeicher ($C_{ES}$), in dem die Rückspeiseenergie von der Anlage (A) gespeichert;
   eine Stromquellenschaltung (SQS); und
   eine Steuerung (ST) verbunden mit dem Zwischenkreis (ZK) und der Stromquellenschaltung (SQS).

2. Schaltungsvorrichtung nach Anspruch 1, bei welcher die Steuerung (ST) mit einer Eingangszwischenkreissollspannung ($U_{ZKEsoll}$) und einer Eingangszwischenkreisspannung ($U_{ZKE}$) verbunden ist.

3. Schaltungsvorrichtung nach Anspruch 2, bei welcher die Steuerung (ST) derart eingerichtet ist, dass die Steuerung (ST) gemäß einem Abgleich zwischen der Eingangszwischenkreissollspannung ($U_{ZKEsoll}$) und der Eingangszwischenkreisspannung ($U_{ZKE}$) einen zusätzlichen Stromanteil (Is) aus dem zusätzlichen Energiespeicher ($C_{ES}$) einstellt.

4. Schaltungsvorrichtung (S) nach Anspruch 1, ferner umfassend einen Gleichrichter (GR), angeordnet zwischen Eingang (IN) und Zwischenkreis (ZK) der Schaltungsstruktur (S).

5. Schaltungsvorrichtung (S) nach Anspruch 4, bei welcher
der Gleichrichter (GR) mindestens eines aus einem Dioden-Gleichrichter oder geschalteten Gleichrichter ist.

6. Schaltungsstruktur (S) nach Anspruch 1, ferner umfassend
einen Wechsel-Gleichrichter (WGR), angeordnet zwischen Eingang (IN) und Zwischenkreis (ZK).

7. Schaltungsvorrichtung (S) nach einem der Ansprüche 1 bis 3, bei welcher
der zusätzliche Energiespeicher ($C_{ES}$) mindestens ein von einem DLC (Double Layer Capacitor), Goldcaps, Supercaps oder normalen Kondensator umfassendes Array umfasst.

8. Schaltungsvorrichtung (S) nach einem der Ansprüche 1 bis 3 und 7, ferner umfassend mehrere zusätzliche Energiespeicher ($C_{ES}$) und mehrere Stromquellenschaltungen (SQS).

9. Verfahren zur Versorgung einer Anlage (A) mit Energie unter Verwendung von Rückspeiseenergie der Anlage (A), das Verfahren umfassend die Schritte:

    - Abbremsen einer Anlage (A) und dabei Erzeugung der Rückspeisenergie;
    - Leiten der Rückspeiseenergie von der Anlage (A) in einen Zwischenkreisspeicher (C) und einen zusätzlichen Energiespeicher ($C_{ES}$);
    - Erfassen einer Eingangszwischenkreisspannung ($U_{ZKE}$);
    - Abgleichen der Eingangszwischenkreisspannung ($U_{ZKE}$) mit einer Eingangszwischenkreissollspannung ($U_{ZKEsoll}$);
    - Sperren des Zwischenkreisspeichers (C) gemäß des Abgleichergebnisses;
    - Speichern der Rückspeiseenergie im Wesentlichen in den zusätzlichen Energiespeicher ($C_{ES}$) und nicht im Zwischenkreisspeicher (C); und
    - Versorgen der Anlage (A) mit Energie aus dem Zwischenkreisspeicher (C) und dem zusätzlichen Energiespeicher ($C_{ES}$).

10. Verfahren nach Anspruch 9, bei welchem
das Leiten der Rückspeiseenergie von der Anlage (A) in den zusätzlichen Energiespeicher ($C_{ES}$) durch Sperren einer Zwischenkreisdiode ($D_{ZK}$) erfolgt.

11. Verfahren nach Anspruch 9 und 10, bei welchem
die Speicherung der Rückspeiseenergie durch einen Stromquellenstrom (Is) aus einer Stromquellenschaltung (SQS) im Wesentlichen in den zusätzlichen Energiespeicher ($C_{ES}$) und nicht im Zwischenkreisspeicher (C) erfolgt.

Stand der Technik

Fig. 1

Fig. 2

Fig. 3

Fig. 4

Fig. 5

Fig. 6

Fig. 7

Fig. 8A

Fig. 8B

Fig. 8C

Fig. 8D

Fig. 8

Fig. 9A

Fig. 9B

Fig. 9C

Fig. 9D

Fig. 9E

Fig. 9F

Fig. 9

Fig. 10A

$P_M$

$t_1$  $t_2$  $t$

Fig. 10B

$P_{ZKA}$

$t_1$  $t_2$  $t$

Fig. 10C

$P_{ES}$

$t_1$  $t_2$  $t$

Fig. 10D

$P_{Netz}$

$t_1$  $t_2$  $t$

Fig. 10

Fig. 11A

Fig. 11B

Fig. 11C

Fig. 11D

Fig. 11

Fig. 12A

Fig. 12B

Fig. 12C

Fig. 12D

Fig. 12E

Fig. 12F

Fig. 12

Fig. 13A

Fig. 13B

Fig. 13C

Fig. 13D

Fig. 13

Fig. 14A

Fig. 14B

Fig. 14C

Fig. 14D

Fig. 14

Fig. 15A

Fig. 15B

Fig. 15C

Fig. 15D

Fig. 15E

Fig. 15F

Fig. 15

Fig. 16A

Fig. 16B

Fig. 16C

Fig. 16D

Fig. 16

Fig. 17A

Fig. 17B

Fig. 17C

Fig. 17D

Fig. 17

Fig. 18A

$M_M$ ... $t_7$ $t_8$ ... $t$

Fig. 18B

$i_M$ ... $t_7$ $t_8$ ... $t$

Fig. 18C

$I_{ZKA}$
$I_{DZK}$ ... $t_7$ $t_8$ ... $t$

Fig. 18D

$I_{ES}$ ... $t_7$ $t_8$ ... $t$

Fig. 18E

$I_S$ ... $t_7$ $t_8$ ... $t$

Fig. 18F

$i_{Netz}$ ... $t_7$ $t_8$ ... $t$

Fig. 18

Fig. 19A

Fig. 19B

Fig. 19C

Fig. 19D

Fig. 19

Europäisches Patentamt
European Patent Office
Office européen des brevets

# EUROPÄISCHER RECHERCHENBERICHT

**Nummer der Anmeldung**

EP 21 21 1070

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 693 206 A1 (MAZDA MOTOR [JP]) 12. August 2020 (2020-08-12) | 1-7,9,11 | INV. H02P3/14 H02J7/34 H02M3/155 |
| A | * Abbildungen 4,6 * * Absätze [0030] – [0038], [0040], [0041], [0044], [0047], [0052], [0056] – [0059], [0063] – [0067], [0069], [0072] – [0076], [0093], [0097], [0098] * | 8,10 | |
| | ----- | | |
| X | EP 3 135 527 A1 (GEN ELECTRIC [US]) 1. März 2017 (2017-03-01) | 1-7,9-11 | |
| A | * Abbildungen 1,4,8,9,10 * * Absätze [0004], [0013], [0016], [0017], [0018], [0019], [0021], [0028] – [0031], [0035] * | 8 | |
| | ----- | | |

**RECHERCHIERTE SACHGEBIETE (IPC)**

H02P
H02J
H02M

Der vorliegende Recherchenbericht wurde für alle Patentansprüche erstellt

| Recherchenort | Abschlußdatum der Recherche | Prüfer |
|---|---|---|
| München | 23. April 2022 | Zettler, Karl-Rudolf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 21 1070

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-04-2022

| Im Recherchenbericht angeführtes Patentdokument | Datum der Veröffentlichung | Mitglied(er) der Patentfamilie | Datum der Veröffentlichung |
|---|---|---|---|
| EP 3693206 A1 | 12-08-2020 | CN 111516518 A | 11-08-2020 |
| | | EP 3693206 A1 | 12-08-2020 |
| | | JP 2020127297 A | 20-08-2020 |
| | | US 2020247253 A1 | 06-08-2020 |
| EP 3135527 A1 | 01-03-2017 | CN 106476635 A | 08-03-2017 |
| | | EP 3135527 A1 | 01-03-2017 |
| | | JP 2017046572 A | 02-03-2017 |
| | | KR 20170026217 A | 08-03-2017 |
| | | US 2017057363 A1 | 02-03-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102020131537